# EUROPEAN PATENT SPECIFICATION

(11) **EP 0 931 911 B1**
(45) Date of publication and mention of the grant of the patent: **14.06.2006**
(21) Application number: 99101011.7
(22) Date of filing: 19.01.1999
(51) Int. Cl.: F01K 23/10, F02C 7/224

(54) **Combined cycle power plant**
Kraftanlage mit kombiniertem Kreislauf
Centrale thermique à cycle combiné

(30) Priority: 19.01.1998 JP 2015798
(43) Date of publication of application: 28.07.1999
(73) Proprietor: KABUSHIKI KAISHA TOSHIBA, Kawasaki-shi, Kanagawa-ken 210-8572 (JP)
(72) Inventor: Funatsu, Tetsuya, 1-1-1, Shibaura, Minato-ku Tokyo (JP); Kohno, Takeshi, 1-1-1, Shibaura, Minato-ku, Tokyo (JP)
(74) Representative: HOFFMANN EITLE

(56) References cited:
- EP-A- 0 588 392
- DE-A- 4 321 081
- US-A- 5 357 746

## Description

### BACKGROUND OF THE INVENTION

### Field of the Invention

The present invention relates to a combined cycle power plant, and more particularly to a combined cycle power plant that is suited to improve thermal efficiency of the plant by heating fuel supplied to a gas turbine.

### Description of the Related Art

A combined cycle power plant is a power plant in combination of a gas turbine and a steam turbine with a high thermal efficiency so constructed as to lead high temperature exhaust gas from the gas turbine to a boiler and to generate steam by heat energy retained in the exhaust gas. This steam enables the power generation by the steam turbine, and coupled with power generated by the gas turbine, it is possible to improve thermal efficiency equivalent to thermal energy retained in exhaust gas compared with the independent power generation by a gas turbine.

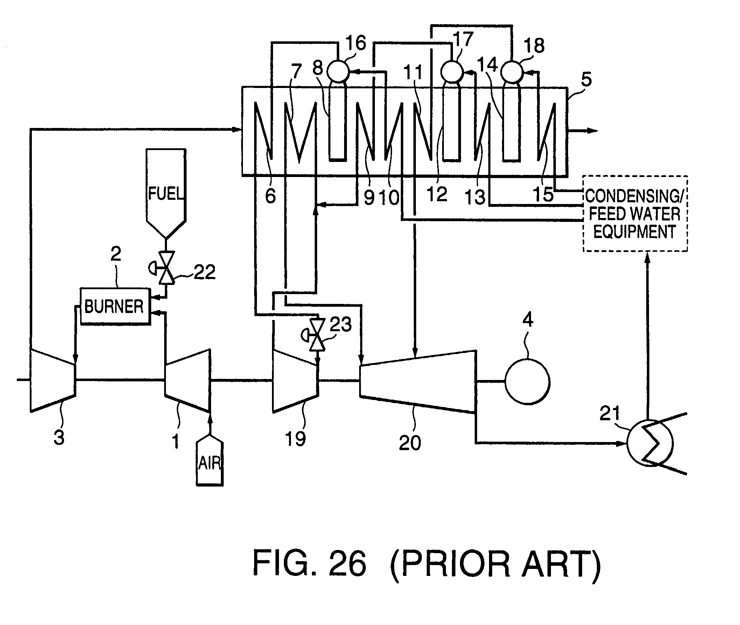

One example of a typical conventional combined cycle power plant is shown in FIG. 26. Compressed air discharged from a compressor 1 is sent to a burner 2 and is mixed with separately supplied fuel. This mixed gas is burnt in burner 2 and becomes high temperature combustion gas. This combustion gas is sent to a gas turbine 3, and is expanded thereby to perform a work. By this work, a generator 4 is rotated to generate electric output.

The combustion gas completed a work is kept at a sufficiently high temperature, and the combustion gas is led to an exhaust heat recovery boiler 5 as exhaust gas from gas turbine 3. The exhaust gas flowing in exhaust heat recovery boiler 5 is subject to the heat exchange with water or steam flowing in a heat transfer tube composing a heat exchanger. At this time, the exhaust gas passes through a high pressure superheater 6, a reheater 7, a high pressure evaporator 8, an intermediate pressure superheater 9, a high pressure economizer 10, a low pressure superheater 11, an intermediate pressure evaporator 12, an intermediate pressure economizer 13, a low pressure evaporator 14 and a low pressure economizer 15, successively.

During this time, waters are heated by exhaust gas and steams are generated in a high pressure drum 16, an intermediate pressure drum 17 and a low pressure drum 18, and become superheated steam by passing through high pressure superheater 6, intermediate pressure superheater 9 and low pressure superheater 11, respectively and are sent to a high pressure turbine 19 and an intermediate pressure turbine 20. The steam flowed to high pressure turbine 19 is expanded and performs a work, and this work rotates generator 4 and thereby electric output is generated.

Further, the exhaust gas of high pressure turbine 19 are superheated to superheated steam in reheater 7 together with superheated steam from intermediate superheater 9. Then, the superheated steam is sent to intermediate turbine 20, where it is expanded and performs a work. This work generates electric output in generator 4. Further, the steam from low pressure superheater 11 is sent to the intermediate stage of intermediate pressure turbine 20, where it is expanded, performs a work and electric output is generated in generator 4.

Further, the exhaust gas from intermediate pressure turbine 20 is discharged into a condenser 21, where it is cooled by cooling water and recovered as condensed water. This condensed water in condenser 21 is extracted by condensing pump (not shown) and further boosted by a feed water pump (not shown) in a condensing/feed water equipment and supplied to low pressure economizer 15 as feed water. The feed waters are supplied to high pressure drum 16, intermediate pressure drum 17 and low pressure drum 17 via high pressure economizer 10, intermediate pressure economizer 13 and low pressure economizer 15, respectively. Further, reference numeral 22 in the figure shows a fuel valve, which controls fuel supplied to burner 2. Reference numeral 23 is a steam control valve, which controls the turbine speed by controlling flow rate of steam to high pressure turbine 19.

For improving thermal efficiency of a combined cycle power plant, it is most effective to increase gas temperature at the inlet of gas turbine 3 (for instance, combustion gas temperature 1300°C) to a higher temperature. In recent years, the object of the development is directed to development of new materials that are usable in such a high temperature region and to development of cooling technology of turbine blades and countermeasures for reducing nitrogen oxides contained in combustion gas with increasing the firing temperature.

However, even if a new material is developed for such use, this type of material is very expensive and a price of gas turbine 3 is thereby increased remarkably. Further, various methods have been proposed so far for the cooling technology of turbine blades, and in these methods the blades are made generally in complicate structure, and thereby it is not inevitable to burden the manufacturing excessively for obtaining a desired structure..Furthermore, it is most difficult to reduce nitrogen oxides. Methods to reduce nitrogen oxides generating volume through the reaction with catalysts have been put in the practical use. But, in order to further reduce the adverse effect to the environmental pollution, nitrogen oxides generating volume must be suppressed more than before and so the difficulty is further increasing.

US-A-5,357,746 discloses a combined cycle power plant having the features defined in the preamble of claim 1.

DE 43 21 081 A1 describes a combined cycle power plant comprising a burner, a gas turbine and a steam turbine. An exhaust heat recovery boiler is provided, having high and low pressure lines. The high pressure line includes an economizer, a drum with integral evaporizer and a superheater. The low pressure line includes a drum with integral evaporizer and a superheater. Upstream of the low and high pressure lines a pre-heater for the condensate is arranged. In addition, a fuel heating line is provided in a fuel line of the burner. A fuel heater is being supplied by feed water from the high pressure line of the heat recovery boiler.

### SUMMARY OF THE INVENTION

Accordingly, one object of the present invention is to provide a combined cycle power plant capable of improving thermal efficiency of the plant without increasing the inlet temperature of a gas turbine.

This object is solved by the subject-matter defined in claim 1. Embodiments of the present invention are named in the dependent claims.

These objects of this invention can be achieved by providing a combined cycle power plant including, a burner, a gas turbine to generate power by expanding high temperature combustion bas from the burner, an exhaust heat recovery boiler to generate steam by heating feed water by exhaust gas discharged from the gas turbine, and.a steam turbine to generate power by expanding the steam supplied from the exhaust heat recovery boiler. The exhaust heat recovery boiler is composed of high pressure, intermediate pressure and low pressure lines, each of which includes an economizer, a drum, an evaporator and a superheater to generate different pressure steam, respectively. The feed waters sent to the economizers of the high pressure, intermediate pressure and low pressure lines are heated by the exhaust gas from the gas turbine and supplied to the drums in the respective pressure lines. The combined cycle power plant further includes a fuel heating line provided in a fuel line of the burner to heat fuel supplied to the burner.

### BRIEF DESCRIPTION OF THE DRAWING

A more complete appreciation of the invention and many of the attendant advantages thereof will be readily obtained as the same becomes better understood by reference to the following detailed description when considered in connection with the accompanying drawings, wherein:
FIG. 1 is a system diagram showing a combined cycle power plant according to an embodiment of this invention;
FIG. 2 is a system diagram showing a combined cycle power plant according to another embodiment of this invention;
FIG. 3 is a system diagram showing a combined cycle power plant according to another embodiment of this invention;
FIG. 4 is a system diagram showing a combined cycle power plant according to another embodiment of this invention;
FIG. 5 is a system diagram showing a combined cycle power plant according to another embodiment of this invention;
FIG. 6 is a system diagram showing a combined cycle power plant according to another embodiment of this invention;
FIG. 7 is a system diagram showing a combined cycle power plant according to another embodiment of this invention;
FIG. 8 is a system diagram showing a combined cycle power plant according to another embodiment of this invention;
FIG. 9 is a system diagram showing a combined cycle power plant according to another embodiment of this invention;
FIG. 10 is a system diagram showing a combined cycle power plant according to another embodiment not being part of this invention;
FIG. 11 is a system diagram showing a combined cycle power plant according to another embodiment not being part of this invention;
FIG. 12 is a system diagram showing a combined cycle power plant according to another embodiment not being part of this invention;
FIG. 13 is a system diagram showing a combined cycle power plant according to another embodiment not being part of this invention;
FIG. 14 is a system diagram showing a combined cycle power plant according to another embodiment not being part of this invention;
FIG. 15 is a system diagram showing a combined cycle power plant according to another embodiment of this invention;
FIG. 16 is a system diagram showing a combined cycle power plant according to another embodiment of this invention;
FIG. 17 is a system diagram showing a combined cycle power plant according to another embodiment of this invention;
FIG. 18 is a system diagram showing a part of a combined cycle power plant according to another embodiment of this invention;
FIG. 19 is a system diagram showing a part of a combined cycle power plant according to another embodiment of this invention;
FIG. 20 is a system diagram showing a part of a combined cycle power plant according to another embodiment of this invention;
FIG. 21 is a system diagram showing a part of a combined cycle power plant according to another embodiment of this invention;
FIG. 22 is a system diagram showing a part of a combined cycle power plant according to another embodiment of this invention;
FIG. 23 is a system diagram showing a part of a combined cycle power plant according to another embodiment of this invention;
FIG. 24 is a system diagram showing a part of a combined cycle power plant according to another embodiment of this invention;
FIG. 25 is a system diagram showing a part of a combined cycle power plant according to another embodiment of this invention; and
FIG. 26 is a system diagram showing one example of a conventional combined cycle power plant.

### DETAILED DESCRIPTION OF THE PREFERRED EMBODIMENTS

Referring now to the drawings, wherein like reference numerals designate identical or corresponding parts throughout the several views, the embodiments of this invention will be described below.

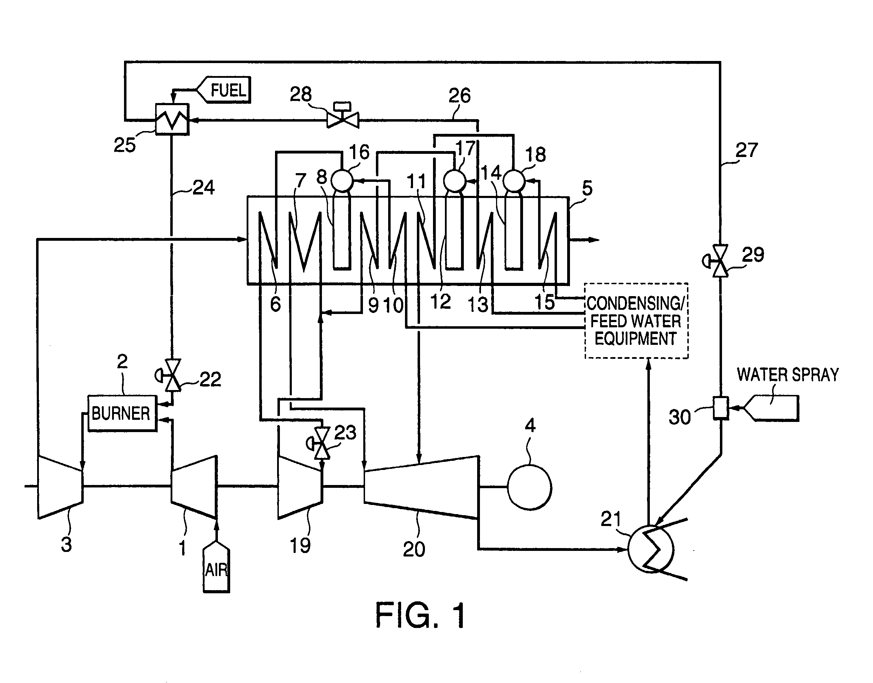

FIG. 1 shows a system construction of a combined cycle power plant according to a first embodiment of this invention.

In FIG. 1, a fuel heater 25 is provided to a fuel line 24, which is connecting a source of fuel (not shown) and burner 2. A heating medium line is connected to this fuel heater 25. This heating medium line is composed of a high temperature feed water pipe 26 communicating from the outlet of intermediate pressure economizer 13 to fuel heater 25 and a low temperature feed water pipe 27 communicating from fuel heater 25 to condenser 21. A main feed water valve 28 is provided in the route of high temperature feed water pipe 26, and a depressurizing valve 29 and a desuperheater 30 are provided in the route of low pressure feed water pipe 27.

This embodiment is in the structure as described above. With the start of gas turbine 3, the exhaust gas enters from the inlet of exhaust heat recovery boiler 5 inside, and passes through high pressure superheater 6, reheater 7, high pressure evaporator 8, intermediate pressure superheater 9, high pressure economizer 10, low pressure superheater 11, intermediate evaporator 12, intermediate pressure economizer 13, low pressure evaporator 14 and low pressure economizer 15 successively. At this time, steam and feed water flowing through respective heat transfer tubes are heated.

When exhaust heat recovery boiler 5 is started to operate, main feed water valve 28 is fully opened and feed water extracted from the outlet of intermediate pressure economizer 13 passes through high temperature feed water pipe 26 and flows to fuel heater 25. This feed water heats fuel flowing to the heat transfer tube of fuel heater 25. Temperature of feed water from intermediate pressure economizer 13 is low when the operation is started but it is increased with the rise of exhaust gas temperature of gas turbine 3, and fuel passing through fuel heater 25 can be heated to a desirable high temperature which does not cool burner 2 excessively.

Then, the temperature dropped feed water flows to low temperature feed water pipe 27 from fuel heater 25 and its pressure is reduced when feed water reaches depressurizing valve 29, and further is cooled down to a low temperature acceptable by condenser 21 in desuperheater 30 using spray that water and is recovered in condenser 21.

Thus, according to this embodiment it is possible to recover heat retained in the exhaust gas of gas turbine 3 effectively through feed water as a heating medium and it becomes possible to improve thermal efficiency of a combined cycle power plant.

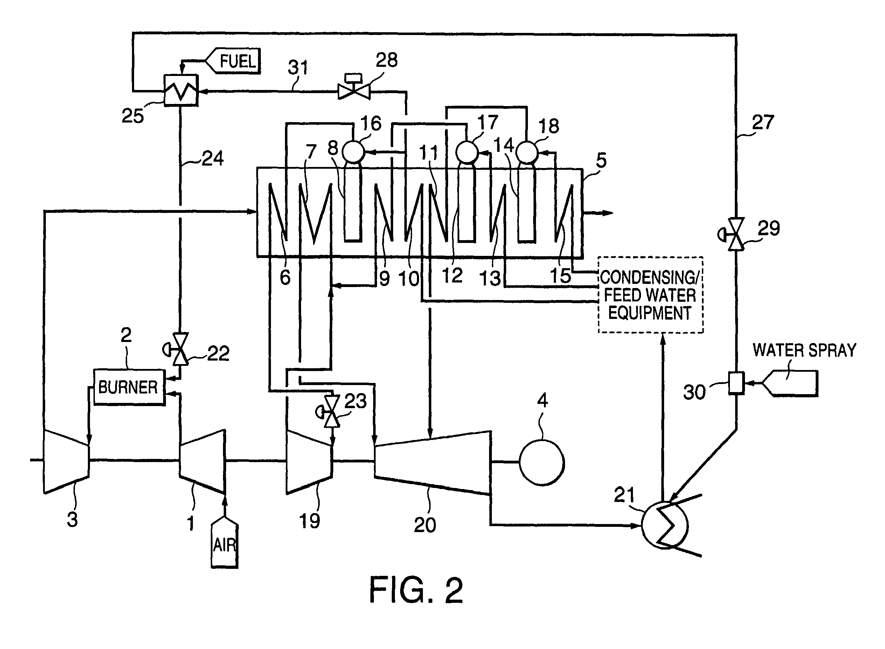

Further, another embodiment of the present invention will be described. In FIG. 2, fuel heater 25 is provided to fuel line 24. The heating medium line connected to this fuel heater 25 is composed of a high temperature feed water pipe 31 communicating from high pressure economizer 10 to fuel heater 25 and low temperature feed water pipe 27 communicating from fuel heater 25 to condenser 21. Main feed water valve 28 is provided in the route of high temperature feed water pipe 31, and depressurizing valve 29 and desuperheater 30 are provided in the route of low temperature feed water pipe 27.

This embodiment is in the structure as described above. When exhaust heat recovery boiler 5 is started to operate, main feed water valve 28 is fully opened and the high temperature feed water extracted from the outlet of high pressure economizer 10 passes through high temperature feed water pipe 31 and flows to fuel heater 25. This feed water heats fuel flowing to the heat transfer tube of fuel heater 25. As the feed water extracted from high pressure economizer 10 is heated by the exhaust gas that is at a relatively high temperature at an early stage after starting the operation, its temperature is high, and fuel passing through fuel heater 25 is heated by this high temperature feed water to a desirable high temperature which does not cool down burner 2 excessively.

Then, the temperature dropped feed water flows from fuel heater 25 to low temperature feed water pipe 27 and when feed water reaches depressurizing valve 29 its pressure is reduced to a lower pressure, and further is cooled down to a low temperature acceptable by condenser 21 using spray water in desuperheater 30 and is recovered in condenser 21.

Thus, according to this embodiment it is possible to recover heat retained in the exhaust gas of gas turbine 3 effectively through feed water as a heating medium and it becomes possible to improve thermal efficiency of a combined cycle power plant.

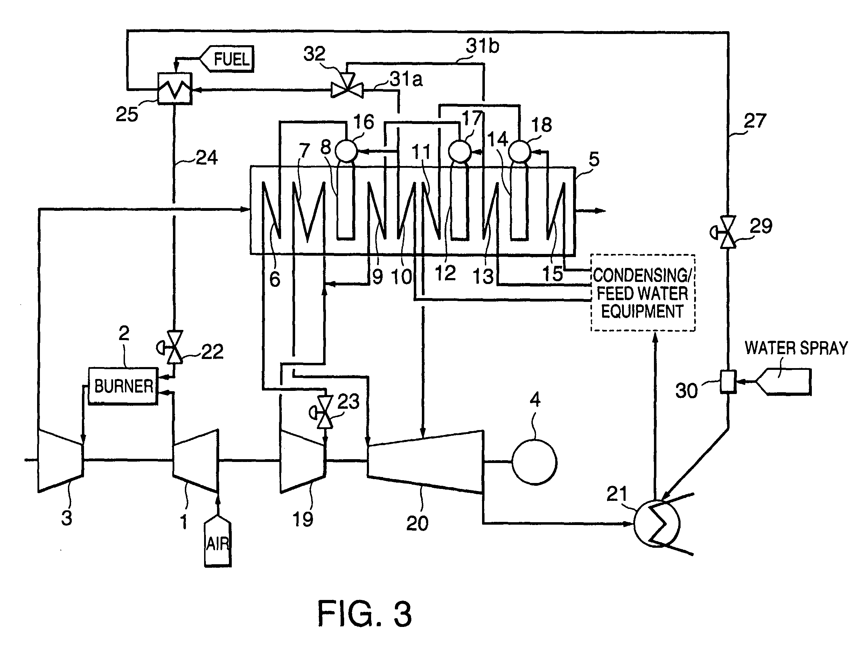

Further, another embodiment of the present invention will be described. In FIG. 3, fuel heater 25 is provided to fuel line 24. Further, there is provided a heating medium line composed of a first high temperature feed water pipe 31a communicating from the outlet of high pressure economizer 10 to fuel heater 25, a second high temperature feed water pipe 31b communicating from the outlet of intermediate pressure economizer 13 to first high temperature feed water pipe 31a and low pressure feed water pipe 27 communicating from fuel heater 25 to condenser 21. In addition, a three-way valve 32 is provided at a point connecting first high temperature feed water pipe 31a and second high temperature feed water pipe 31b.

This embodiment is in the structure as described above. When exhaust heat recovery boiler 5 is started to operate, three-way valve 32 is opened so that the route of first high temperature feed water pipe 31a communicates fuel heater 25. The high temperature feed water extracted from the outlet of high pressure economizer 10 passes through first high temperature feed water pipe 31a and flows to fuel heater 25. This feed water heats fuel flowing through the heat transfer tube of fuel heater 25. As the feed water from high pressure economizer 10 is heated by the exhaust gas of relatively high temperature at an early stage after starting operation and is at a high temperature. The fuel passing through fuel heater 25 is heated by this high temperature feed water to a desirable high temperature that does not cool down burner 2 excessively.

While maintaining fuel at a desirable high temperature that does not cool burner 2, three-way valve 32 is changed over so that the route of second high temperature feed water pipe 31b communicates fuel heater 25. At this time, the high temperature feed water extracted from the outlet of intermediate pressure economizer 13 passes through second high temperature feed water pipe 31b and flows to fuel heater 25 and heats the fuel passing fuel heater 25.

In other words, immediately after when the operation is started, the feed water from intermediate pressure economizer 13 is at a low temperature and is not able to heat fuel rapidly to a desired temperature. But during this period of time, using feed water at higher temperature from high pressure economizer 10, fuel is heated, and a certain waiting time is placed until the temperature of the feed water at the outlet of intermediate pressure economizer 13 becomes high. Then, when it becomes possible to supply sufficiently high temperature feed water from the outlet of intermediate pressure economizer 13, three-way valve 32 is changed over.

Then, the temperature dropped feed water flows out of fuel heater 25, reaches depressurizing valve 29 after passing through low temperature feed water pipe 27 and after its pressure is reduced, it is cooled down to a specified temperature in desuperheater 30 using spray water and is recovered in condenser 21.

In this embodiment, a method to change over a heating medium step by step is described. Instead of this method, while maintaining the positions of respective ports of three-way valve 32 at intermediate positions, feed water from respective ports may be mixed and supplied.

Thus, according to this embodiment it is possible to recover heat retained in the exhaust gas from gas turbine 3 efficiently through feed water as a heating medium and it becomes possible to improve thermal efficiency of a combined cycle power plant.

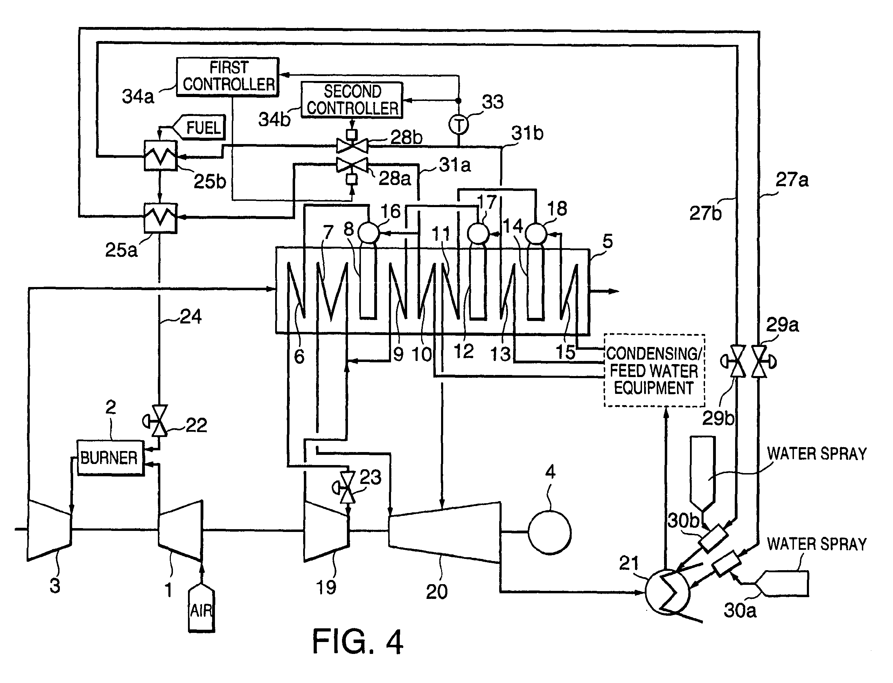

Further, another embodiment of the present invention will be described. In FIG. 4, a first fuel heater 25a and a second fuel heater 25b are provided in series to fuel line 24. Further, first fuel hater 25a is provided with a heating medium line composed of a first high temperature feed water pipe 31a communicating from the outlet of high pressure economizer 10 to first fuel heater 25a and a first low temperature feed water pipe 27a communicating from first fuel heater 25a to condenser 21. Second fuel heater 25b is provided with a heating medium line composed of a second high temperature feed water pipe 31b communicating from the outlet of intermediate pressure economizer 13 to second fuel heater 25b and a second low temperature feed water pipe 27b communicating from second fuel heater 25b to condenser 21.

Further, a main feed water valve 28a is provided in the route of first high temperature feed water pipe 31a and a main feed water valve28b is provided in the route of second high temperature feed water pipe 31b. Further, a depressurizing valve 29a and a desuperheater 30a are provided in the route of first low temperature feed water pipe 27a and a depressurizing valve 29b and a desuperheater 30b are provided in the route of second low temperature feed water pipe 27b.

Further, main feed water valve 28a is provided with a first controller 34a which opens/closes main feed water valve 28a according to a detected temperature signal from a temperature detector 33, which detects an outlet feed water temperature of intermediate pressure economizer 13. Main feed water valve 28b is provided with a second controller 34b which opens/closes main feed water valve 28b according to the detected temperature signal from temperature detector 33.

This embodiment is in the structure as described above. When the exhaust heat recovery boiler 5 is started to operate, the feed water extracted from intermediate pressure economizer 13 is at a low temperature, and main feed water valve 28a is kept fully opened by an opening signal given from first controller 34a according to a detected temperature signal of temperature detector 33.

Main feed water valve 28a is fully opened by this signal and the high temperature feed water extracted from the outlet of high pressure economizer 10 passes through first high temperature feed water pipe 31a and flows to first fuel heater 25a. This feed water heats fuel flowing to the heat transfer tube of first fuel heater 25a. The feed water extracted from high pressure economizer 10 is heated by the relatively high temperature exhaust gas from an early stage after starting operation and is at a high temperature. As the fuel is heated by this high temperature feed water, the temperature of fuel passing through first fuel heater 25a is raised to a desirable high temperature that does not cool down burner 2 excessively.

On the other hand, when the feed water extracted from intermediate pressure economizer 13 is at a low temperature, main feed water valve 28b is fully closed by a closing signal given from second controller 34b according to a detected temperature signal from temperature detector 33, and the flow of feed water to second fuel heater 25b from intermediate pressure economizer 13 is kept stopped.

Hereafter, when the outlet feed water temperature of intermediate pressure economizer 13 exceeds a certain prescribed temperature with the rise of exhaust gas temperature of gas turbine 3, an opening signal is output from second controller 34b to main feed water valve 28b according to a temperature signal from temperature detector 33. Then main feed water valve 28b is fully opened and high temperature feed water extracted from the outlet of intermediate pressure economizer 13 flows to second fuel heater 25b by passing through second high temperature feed water pipe 31b and heats fuel flowing second fuel heater 25b. On the other hand, a closing signal is output from first controller 34a to main feed water valve 28a, which is then fully closed to stop the flow of feed water from high temperature economizer 10 to first fuel heater 25a.

Thus, fuel is heated using the feed water extracted from the outlet of high pressure economizer 10, of which temperature is high at the beginning when the operation is started. Then, when the outlet feed water temperature of intermediate pressure economizer 13 becomes sufficiently high, this high temperature feed water is led to second fuel heater 25b and fuel can be steadily heated.

During this operation, the feed water flowed from first fuel heater 25a passes through first low temperature feed water pipe 27a, and when it reaches depressurizing valve 29a, its pressure is reduced and after further cooled in desuperheater 30, it is recovered in condenser 21. Further, the feed water flowed from second fuel heater 25b passes through second low temperature feed water pipe 27b, and when it reaches depressurizing valve 29b its pressure is reduced, and after further cooled in desuperheater 30, it is recovered in condenser 21.

In this embodiment, a method to change over heating mediums step by step according to a temperature signal detected by temperature detector 33 is described. But instead of this method, it is possible to change over heating medium step by step using detecting signals shown below. That is, if the internal pressure of intermediate pressure drum 17 exceeds a pre-determined pressure, heating mediums may be changed over according to a detected pressure signal from a pressure detector (not shown). Further, when a certain time passes after exhaust heat recovery boiler 5 is started to operate, heating mediums can be changed over according to a clocking time over signal from a timer (not shown).

Further, heating mediums may be changed over according to a detected load signal when a combined cycle power plant reaches a specified state, for instance, a minimum load state. In any method, it is possible to obtain the same effect as the embodiment described above.

Thus, according to these embodiments, it is possible to recover heat retained in the exhaust gas from gas turbine 3 effectively through the feed water used as a heating medium, and thermal efficiency of a combined cycle power plant can be improved.

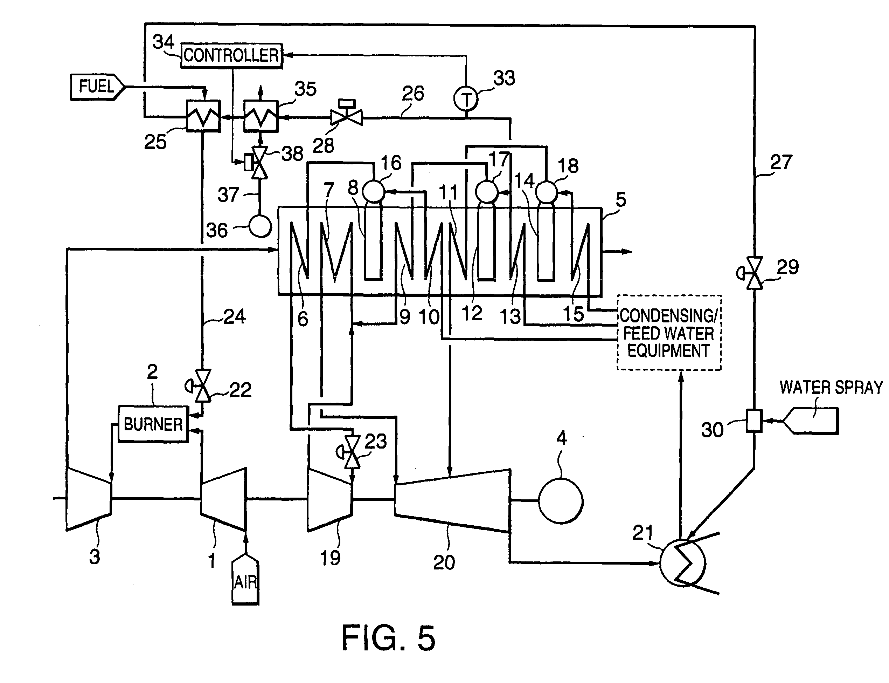

Further, another embodiment of the present invention will be described. In FIG. 5, fuel heater 25 is provided to fuel line 24. This fuel heater 25 is provided with a heating medium line composed of high temperature feed water pipe 26 communicating from the outlet of intermediate pressure economizer 13 to fuel heater 25 and low temperature feed water pipe 27 communicating from fuel heater 25 to condenser 21.

Further, a feed water heater 35 to heat feed water is provided in the route of high temperature feed water pipe 26. This feed water heater 35 is provided with an auxiliary steam pipe 37 communicating to a header 36 and feed water heater 35. In the route of auxiliary steam pipe 37, an extraction steam valve 38 is provided. Further, this extraction steam valve 38 is provided with a controller 34 to open/close extraction steam valve 38 according to a detected temperature signal from temperature detector 33, which detects an outlet feed water temperature of intermediate pressure economizer 13.

This embodiment is in the structure as described above. When exhaust heat recovery boiler 5 is started to operate, main feed water valve 28 is fully opened and the feed water extracted from the outlet of intermediate pressure economizer 13 passes through high temperature feed water pipe 26 and flows to fuel heater 25. This feed water heats the fuel flowing through the heat transfer tube of fuel heater 25. As the feed water extracted from intermediate pressure economizer 13 is at a low temperature when the operation is started, extraction steam valve 38 is kept fully opened by an opening signal given from controller 34 according to a detected temperature signal of temperature detector 33. Therefore, the auxiliary steam from header 36 passes through auxiliary steam pipe 37, flows to feed water heater 35 and heats the low temperature feed water flowing to fuel heater 25 in feed water heater 35. Thus, the low temperature feed water is heated to a sufficiently high temperature suited as a heating medium, and the fuel passing through fuel heater 25 can be heated to a specified temperature.

Then, when the outlet feed water temperature of intermediate pressure economizer 13 exceeds a pre-determined temperature with the rise of exhaust gas temperature of gas turbine 3, a closing signal is output to extraction steam valve 38 from controller 34 according to the temperature signal from temperature detector 33, extraction steam valve 38 is fully closed and the flow of auxiliary steam is stopped.

Thus, it is possible to heat fuel while keeping the feed water of which temperature is initially low at the time when the operation is started at a high temperature using auxiliary steam, and to heat fuel steadily by leading high temperature feed water to fuel heater 25 when the outlet feed water temperature of intermediate pressure economizer 13 is raised sufficiently high.

Thus, according to this embodiment, it is possible to recover heat retained in the exhaust gas of gas turbine 3 efficiently through feed water used as a heating medium and it becomes possible to improve thermal efficiency of a combined cycle power plant.

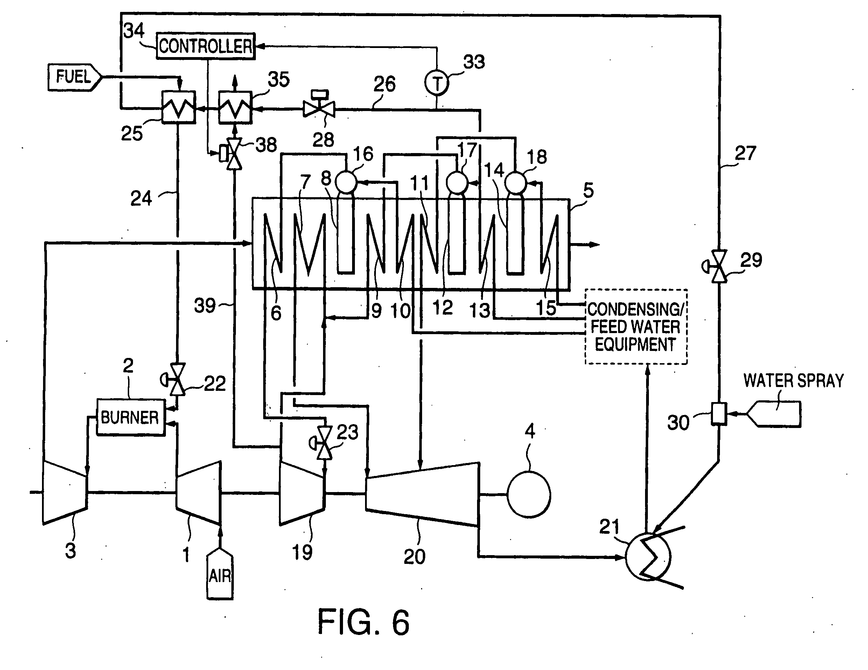

Further, another embodiment of the present invention will be described. In FIG. 6, fuel heater 25 is provided to fuel line 24. This fuel heater 25 is provided with a heating medium line composed of high temperature feed water pipe 26 communicating from the outlet of intermediate pressure economizer 13 to fuel heater 25 and low temperature feed water pipe 27 communicating from fuel heater 25 to condenser 21. In the route of high temperature feed water pipe 26, feed water heater 35 is provided to heat feed water. An extraction steam pipe 39 communicating from the exhaust line of high pressure turbine 19 to feed water heater 35 is provided to feed water heater 35. In the route of extraction steam pipe 39, extraction steam valve 38 is provided.

Further, extraction steam valve 38 is provided with controller 34 that opens/closes extraction steam valve 38 according to a detected temperature signal from temperature detector 33, which detects an outlet feed water temperature of intermediate pressure economizer 13.

This embodiment is in the structure as described above. When exhaust heat recovery boiler 5 is started to operate, main feed water valve 28 is fully opened and the feed water extracted from the outlet of intermediate pressure economizer 13 passes through high temperature feed water pipe 26 and flows to fuel heater 25. This feed water heats the fuel flowing through the heat transfer tube of fuel heater 25. When the operation is started, as the temperature of feed water extracted from intermediate pressure economizer 13 is low, extraction steam valve 38 is kept fully opened by an opening signal given from controller 34 according to a detected temperature signal of temperature detector 33.

Therefore, the steam extracted from the exhaust line of high pressure turbine 19 passes through extraction steam pipe 39 and flows to feed water heater 35, and heats the low temperature feed water flowing to fuel heater 25 in feed water heater 35. Thus, the low temperature feed water is heated to a sufficiently high temperature suited as a heating medium and fuel passing through fuel heater 25 can be raised to a specified temperature.

Hereafter, when the feed water temperature exceeds a certain pre-determined temperature with the rise of exhaust gas temperature of gas turbine 3, a closing signal is output to extraction steam valve 38 from controller 34 according to a temperature signal from temperature detector 33. Then extraction steam valve 38 is fully closed and the flow of extraction steam to feed water heater 35 is stopped. Thus, it becomes possible to heat the fuel passing through fuel heater 25 to a specified temperature by the high temperature feed water extracted from the outlet of intermediate pressure economizer 13.

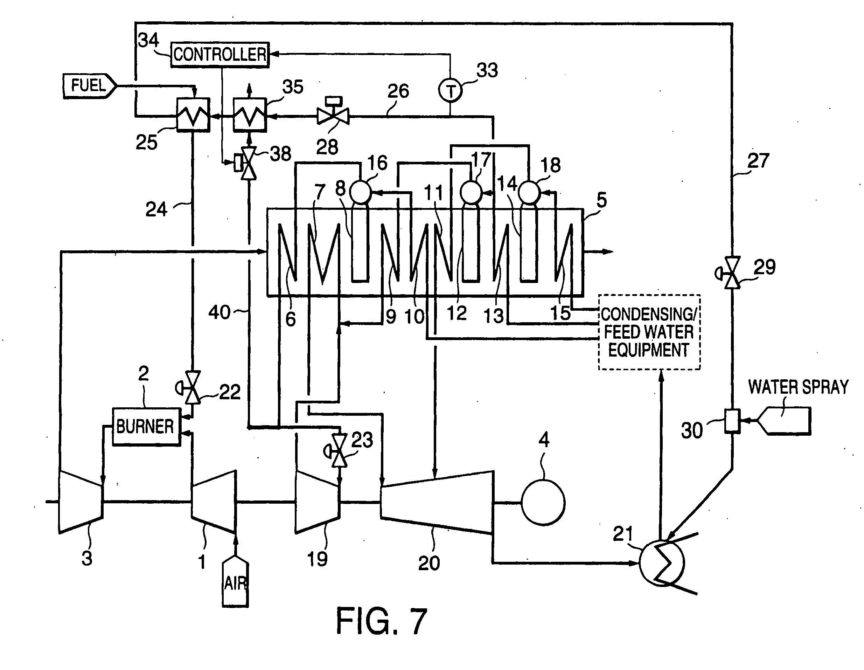

In this embodiment shown in FIG. 6, a method to heat fuel by extracting the exhaust gas of high pressure turbine 19. But instead of this method, the system may be so constructed as to heat fuel by extracting high pressure steam that is led to the inlet of high pressure turbine 19. In this case, the high pressure steam line of high pressure turbine 19 and feed water heater 35 are connected by an extraction steam pipe 40 as shown in FIG. 7.

Thus, according to these embodiments, it is possible to recover heat retained in the exhaust gas of gas turbine 3 efficiently through feed water used as a heating medium and it becomes possible to improve thermal efficiency of a combined cycle power plant.

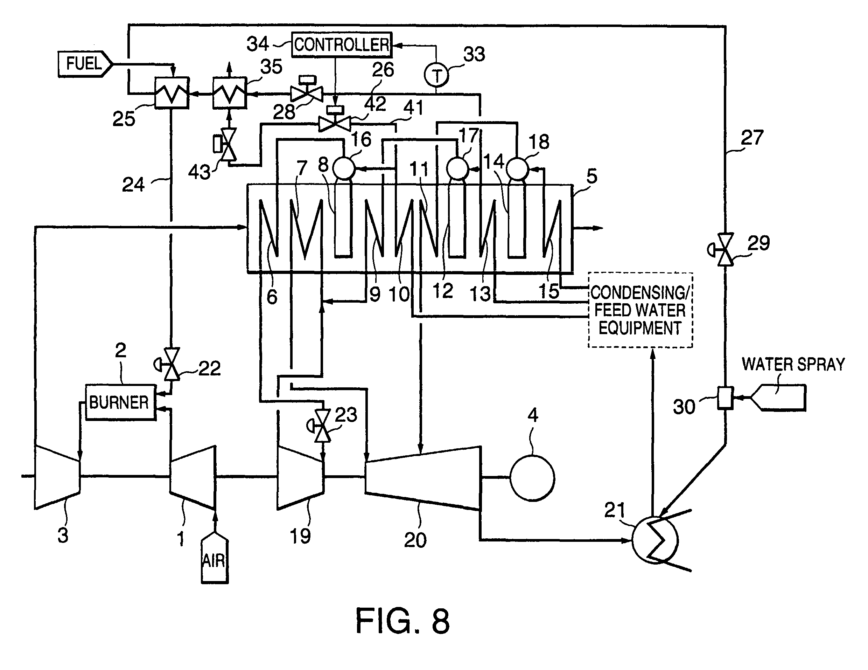

Further, another embodiment of the present invention will be described. In FIG. 8, feed water heater 25 is provided to fuel line 24. This fuel heater 25 is provided with a heating medium line composed of high temperature feed water pipe 26 communicating from the outlet of intermediate pressure economizer 13 to fuel heater 25 and low temperature feed water pipe 27 communicating from fuel heater 25 to condenser 21.

Further, in the route of high temperature feed water pipe 26 feed water heater 35 is provided to heat feed water. Feed water heater 35 is provided with an extraction steam pipe 41 communicating the outlet of high pressure economizer 10 and feed water heater 35. In the route of extraction steam pipe 41, there are provided a main hot water valve 42 and a hot water depressurizing valve 43, which generates flash steam by reducing the pressure of feed water. Further, main hot water valve 42 is provided with controller 34, which opens/closes main hot water valve 42 according to a detected temperature signal from temperature detector 33, which detects an outlet feed water temperature of intermediate pressure economizer 13.

This embodiment is in the structure as described above. When exhaust heat recovery boiler 5 is started to operate, main feed water valve 28 is fully opened and the feed water extracted from the outlet of intermediate pressure economizer 13 passes through high temperature feed water pipe 26 and flows to fuel heater 25. This feed water heats the fuel flowing from a source of fuel (not shown) to the heat transfer tube of fuel heater 25. As the temperature of feed water extracted from intermediate pressure economizer 13 is low at the time when the operation is started, main hot water valve 42 is kept fully opened by an opening signal given by controller 34 according to a detected temperature signal of temperature detector 33.

Therefore, the high temperature feed water from high pressure economizer 10 passes through extraction steam pipe 41, is decompressed in hot water depressurizing valve 43, and becomes flash steam; which flows into feed water heater 35. This steam heats the low temperature feed water flowing into fuel heater 25. Thus, the low temperature feed water is heated to a sufficiently high temperature suited as a heating medium and the fuel passing through fuel heater 25 can be raised to a specified temperature.

Hereafter, when the temperature of feed water from intermediate pressure economizer 13 exceeds a pre-determined temperature with the rise of exhaust gas temperature of gas turbine 3, a closing signal is output to main hot water valve 42 from controller 34 according to a temperature signal from temperature detector 33. Then main hot water valve 42 is fully closed to stop the flow of feed water extracted from high pressure economizer 10. Thus, it becomes possible to raise the fuel passing through fuel heater 25, by the high temperature feed water extracted from the outlet of intermediate pressure economizer 13, to a specified temperature.

Thus, according to this embodiment, it is possible to recover heat retained in the exhaust gas of gas turbine 3 efficiently through feed water used as a heating medium and it becomes possible to improve thermal efficiency of a combined cycle power plant.

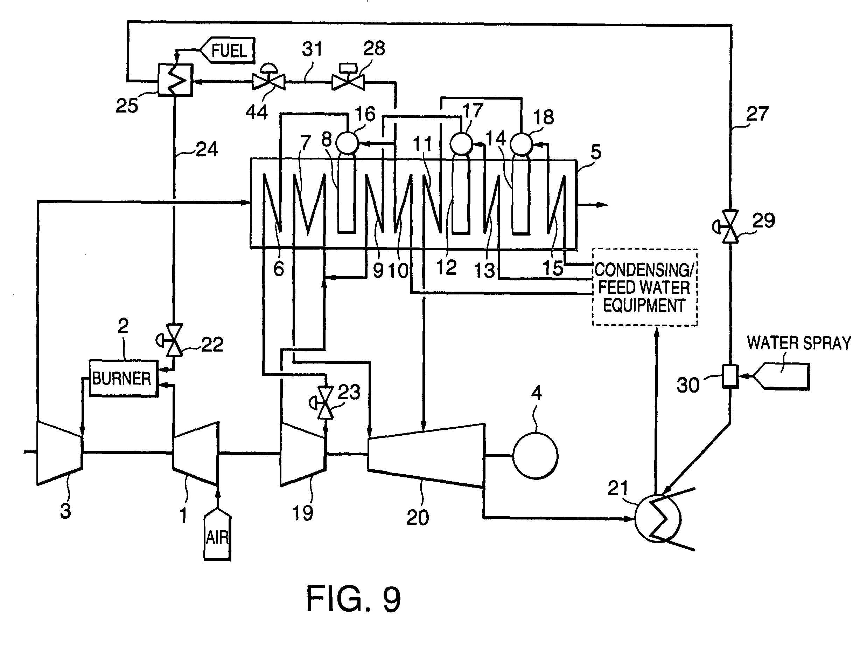

Further, another embodiment of the present invention will be described. In FIG. 9, fuel heater 25 is provided to fuel line 24. This fuel heater 25 is provided with a heating line composed of high temperature feed water pipe 31 communicating from the outlet of high pressure economizer 10 to fuel heater 25 and low temperature feed water pipe 27 communicating from fuel heater 25 to condenser 21. In the route of high temperature feed water pipe 31, there are provided main feed water valve 28 and a feed water depressurizing valve 44 for generating flash steam by reducing the pressure of feed water.

This embodiment is in the structure as described above. When exhaust heat recovery boiler 5 is started to operate, main feed water valve 28 is fully opened, the feed water extracted from the outlet of high pressure economizer 10 passes through high temperature feed water pipe 31, its pressure is reduced in feed water depressurizing valve 44 and it becomes flash steam, which flows into fuel heater 25. This steam heats the low temperature fuel flowing into fuel heater 25, losses sensible heat and condenses. At this time, the temperature of fuel passing through fuel heater 25 is raised by high temperature steam to a desirable high temperature that does not cool burner 2 excessively.

Hereafter, the condensed feed water flows from fuel heater 25 to low temperature feed water pipe 27 and when it reaches depressurizing valve 29, its pressure is reduced, and after it is cooled in desuperheater 30 to a temperature acceptable by condenser 21 it is recovered in condenser 21.

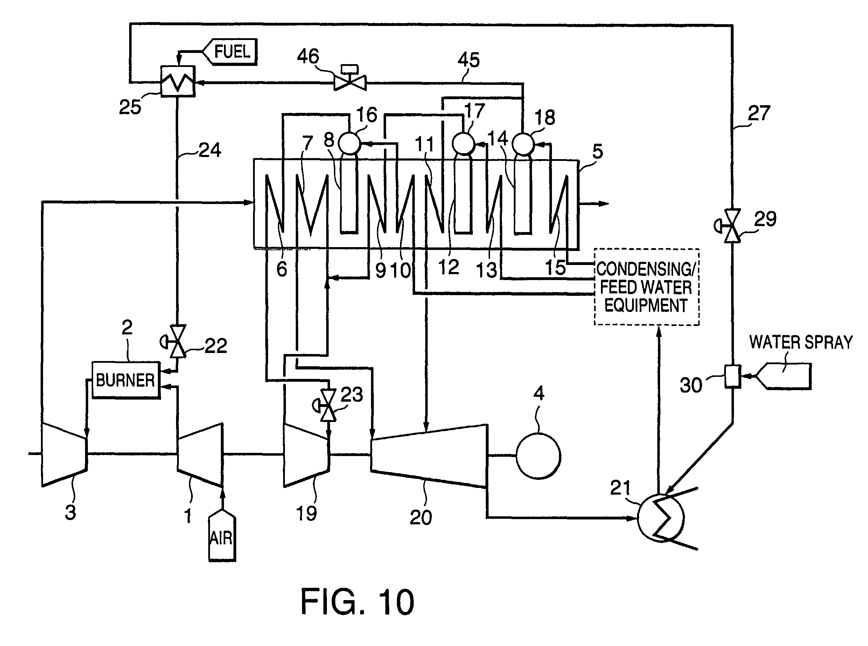

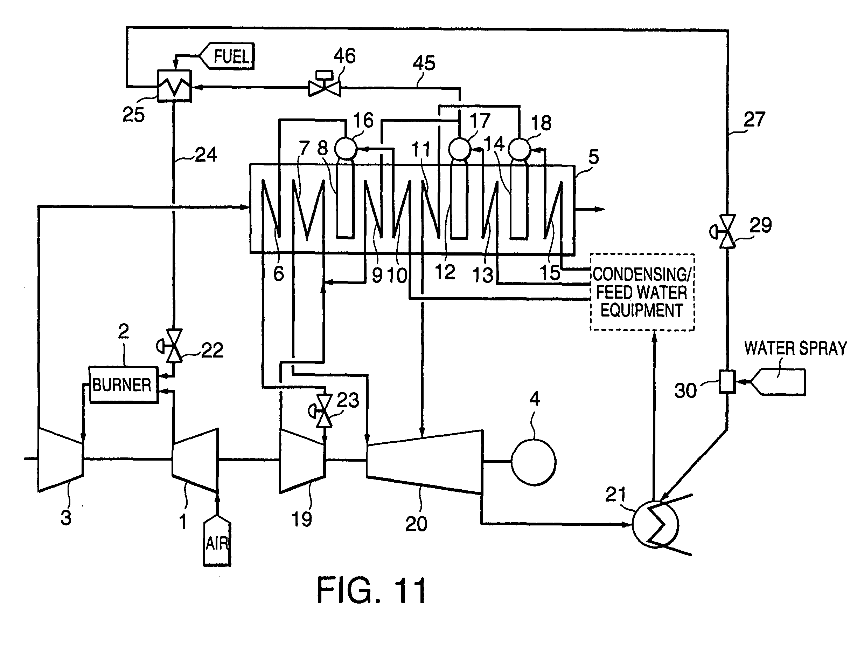

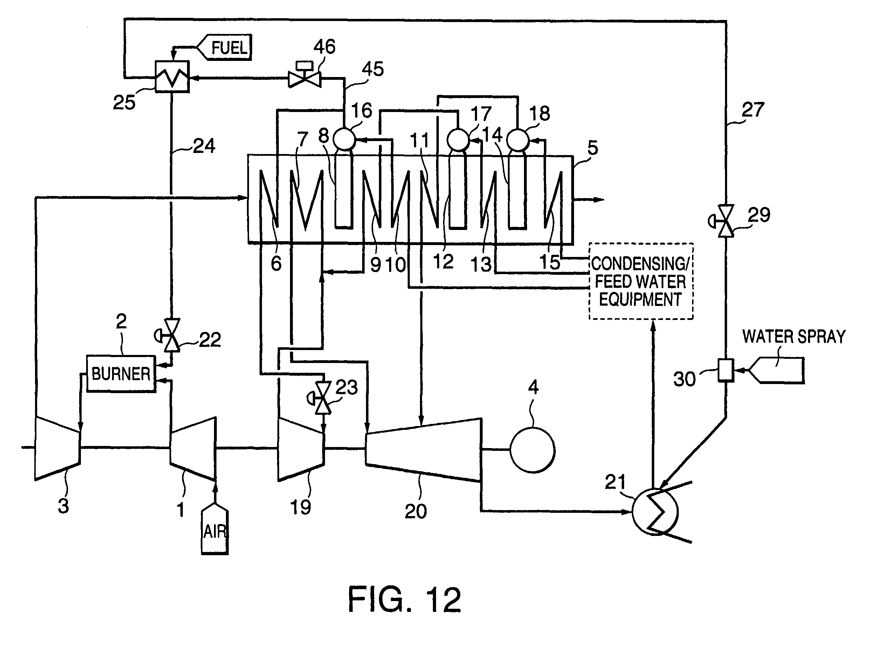

In this embodiment shown in FIG. 9, a method to heat fuel by flash steam obtained from the feed water extracted from the outlet of high temperature economizer 10 is described. Instead of this method, the system may be so constructed as to heat fuel using steam generated in one of low pressure drum 18, intermediate pressure drum 17 and high pressure drum 16. Respective embodiments are shown in FIGs. 10, 11 and 12, which do not form part of the present invention. In these cases, the heating medium line is to be constructed using a heating steam pipe 45 instead of high temperature feed water pipe 31 and steam is to be fed/stopped using an extraction steam valve 46 instead of main feed water valve 28. In these cases, feed water depressurizing valve 44 shown in FIG. 9 is not necessary.

Thus, according to these embodiments, it is possible to recover heat retained in the exhaust gas of gas turbine 3 through feed water or steam used as a heating medium and it becomes possible to improve thermal efficiency of a combined cycle power plant.

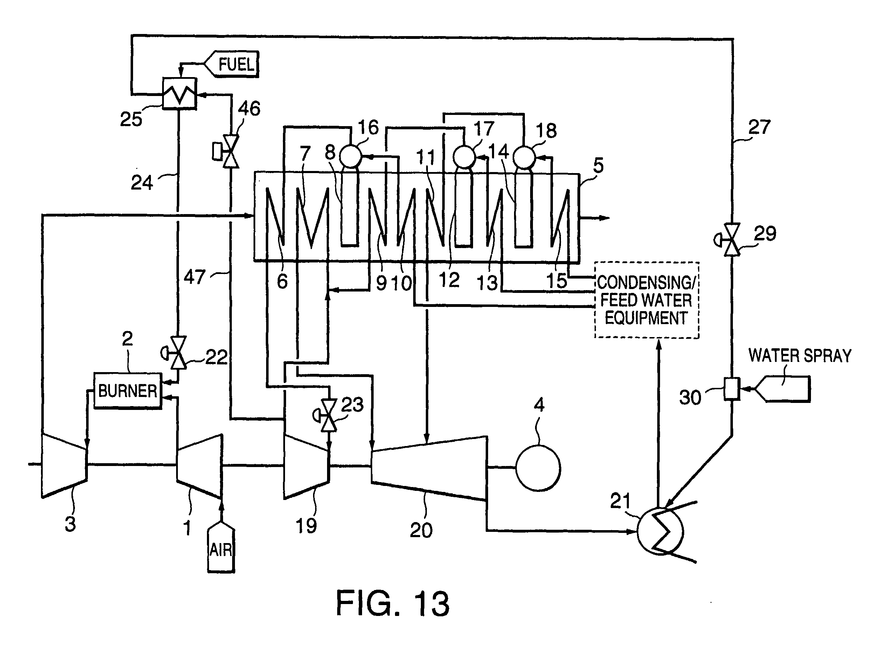

Further, another embodiment will be described, which, however, is not part of the present invention. In Fig. 13, fuel heater 25 is provided with a heating medium line composed of an extraction steam pipe 47 communicating from the exhaust line of high pressure turbine 19 to fuel heater 25 and low temperature feed water pipe 27 communicating from fuel heater 25 to condenser 21. In the route of extraction steam pipe 47, an extraction steam valve 46 is provided.

This embodiment is in the structure as described above, and when exhaust heat recovery boiler 5 is started to operate, extraction steam valve 46 is fully opened. The steam generated in high pressure drum 16 of exhaust heat recovery boiler 5 flows through high pressure turbine 19 to the exhaust line from high pressure superheater 6, and a part of exhaust steam flows to fuel heater 25 after passing through extraction steam pipe 47. This steam heats the low temperature fuel flowing in the heat transfer tube of fuel heater 25, losses its sensible heat and condenses. At this time, the fuel passing through fuel heater 25 is heated by high temperature steam to a desirable high temperature that does not cool burner 2 excessively.

Hereafter, the water produced from the condensation in fuel heater 25 flows from fuel heater 25 to low temperature feed water pipe 27, its pressure is reduced when the water reaches depressurizing valve 29, and after cooled in desuperheater 30, it is recovered in condenser 21.

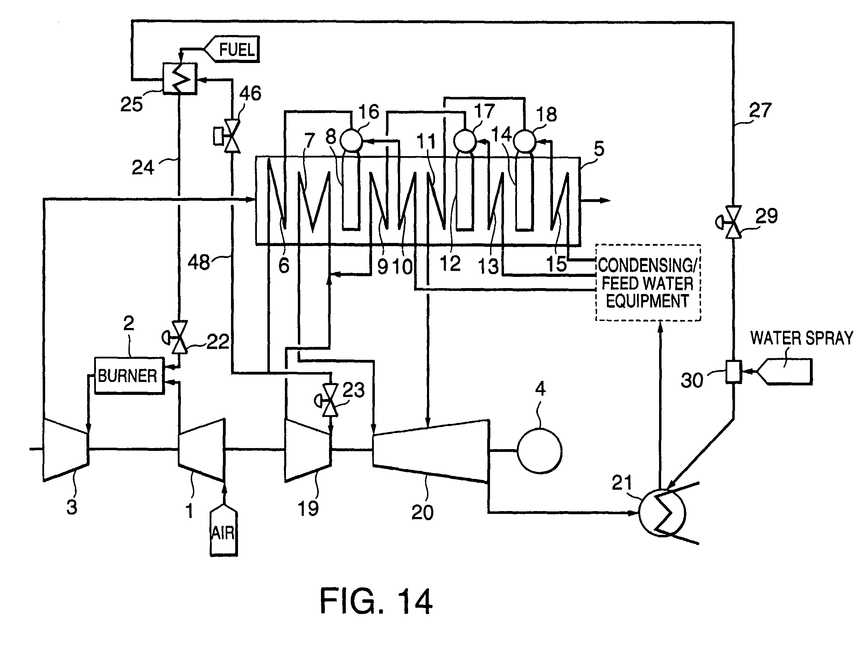

In this embodiment shown in FIG. 13, a method to heat fuel by extracting the exhaust steam of high pressure turbine 19 is described. But instead of this method, the system may be so constructed as to heat fuel by extracting the high pressure steam led to the inlet of high pressure turbine 19, as shown in Fig. 14. Also this embodiment is not part of the present invention. In this case, fuel heater 25 is provided with a heating medium line composed of an extraction steam pipe 48 communicating from the high pressure steam line of high pressure turbine 19 to fuel heater 25 and low pressure feed water pipe 27 communicating from fuel heater 25 to condenser 21. Further, extraction steam valve 46 is provided in the route of extraction steam pipe 48 as shown in FIG. 14.

Thus, according to these embodiments, it is possible to recover heat retained in the exhaust gas of gas turbine 3 efficiently through steam used as a heating medium and it becomes possible to improve thermal efficiency of a combined cycle power plant.

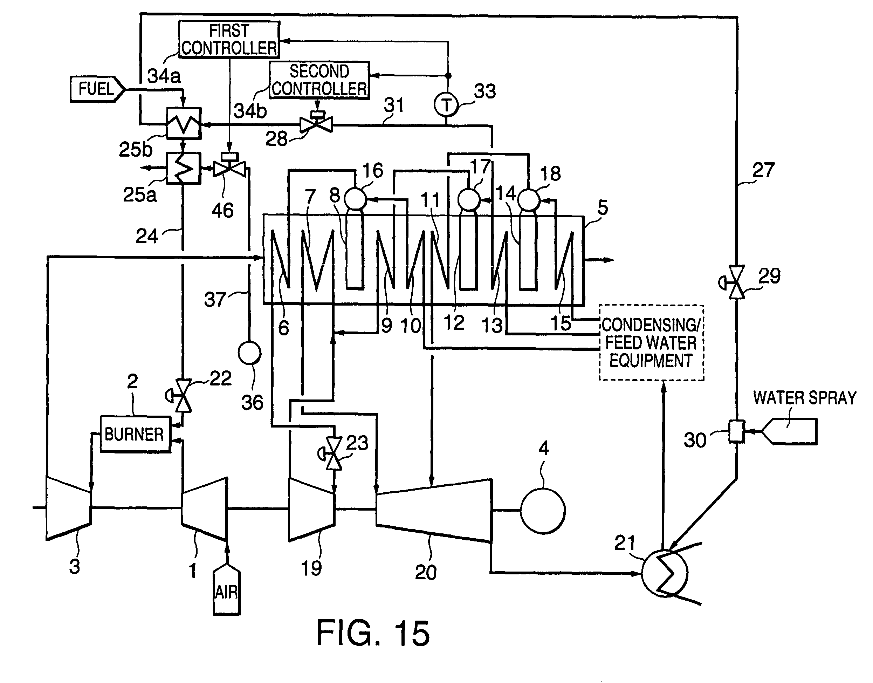

Further, another embodiment of the present invention will be described. In FIG. 15, a first fuel heater 25a and a second fuel heater 25b are connected in series to fuel line 24. First fuel heater 25a is provided with a heating medium line composed of auxiliary steam pipe 37 communicating header 36 and first fuel heater 25a. Extraction steam valve 46 is provided in the route of auxiliary steam pipe 37.

Further, second fuel heater 25b is provided with a heating medium line composed of high temperature feed water pipe 31 communicating from the outlet of intermediate pressure economizer 13 to second fuel heater 25b and low temperature feed water pipe 27 communicating from second fuel heater 25b to condenser 21. Main feed water valve 28 is provided in the route of high temperature feed water pipe 31, and depressurizing valve 29 and desuperheater 30 are provided in the route of low temperature feed water pipe 27.

Further, extraction steam valve 46 is provided with first controller 34a to open/close extraction steam valve 46 according to a detected temperature signal from temperature detector 33, which detects an outlet feed water temperature of intermediate pressure economizer 13. Further, main feed water valve 28 is provided with second controller 34b to open/close main feed water valve 28 according to a detected temperature signal from temperature detector 33.

This embodiment is in the structure as described above. When exhaust heat recovery boiler 5 is started to operate, as the feed water extracted from intermediate pressure economizer 13 is at a low temperature, extraction steam valve 46 is kept fully opened by an opening signal given from first controller 34a according to a detected temperature signal of temperature detector 33. Therefore, the auxiliary stead from header 36 passes through auxiliary steam pipe 37, flows to first fuel heater 25a, heats the fuel passing through first fuel heater 25a, losses its sensible heat and condenses. Thus, the temperature of fuel passing first fuel heater 25a is raised to a desirable high temperature that does not cool burner 2 excessively.

Hereafter, when the feed water temperature at the outlet of intermediate pressure economizer 13 exceeds a pre-determined temperature with the rise of exhaust gas temperature of gas turbine 3, an opening signal is output to main feed water valve 28 from second controller 34b according to a detected temperature signal of temperature detector 33. Then main feed water valve 28 is fully opened, the high temperature feed water extracted from the outlet of intermediate pressure economizer 13 passes through high temperature feed water pipe 31 and flows to second fuel heater 25b and heats the fuel passing through it. At this time, a closing signal is output to extraction steam valve 46 from first controller 34a and extraction steam valve 46 is fully closed, and thereby the flow of auxiliary steam to first fuel heater 25a is stopped.

Thus, at the beginning when the operation is started, fuel is heated using high temperature auxiliary steam, and then, when the outlet feed water temperature of intermediate pressure economizer 13 becomes sufficiently high, it is possible to heat fuel steadily by leading this high temperature feed water to second fuel heater 25b.

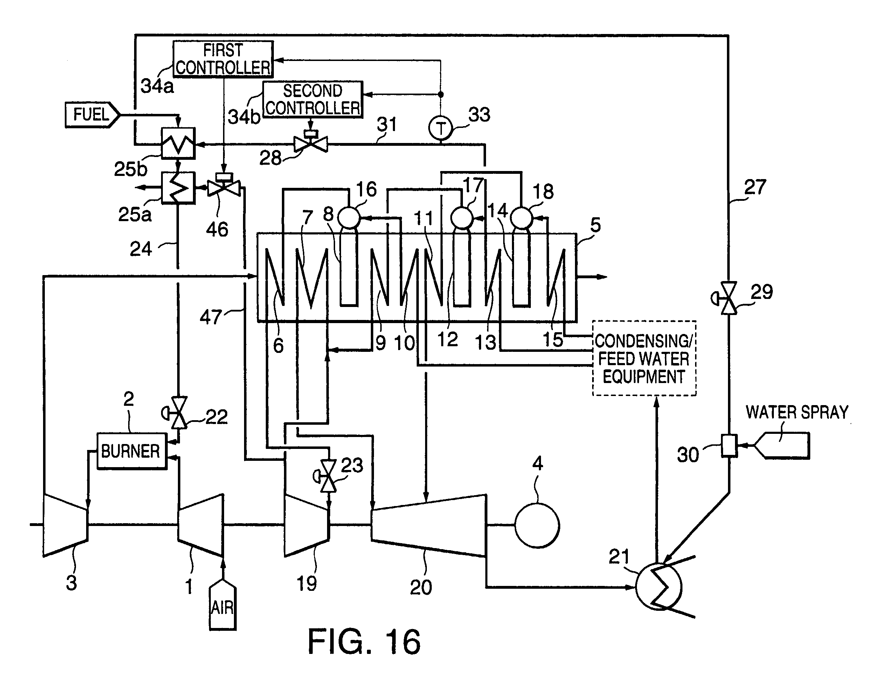

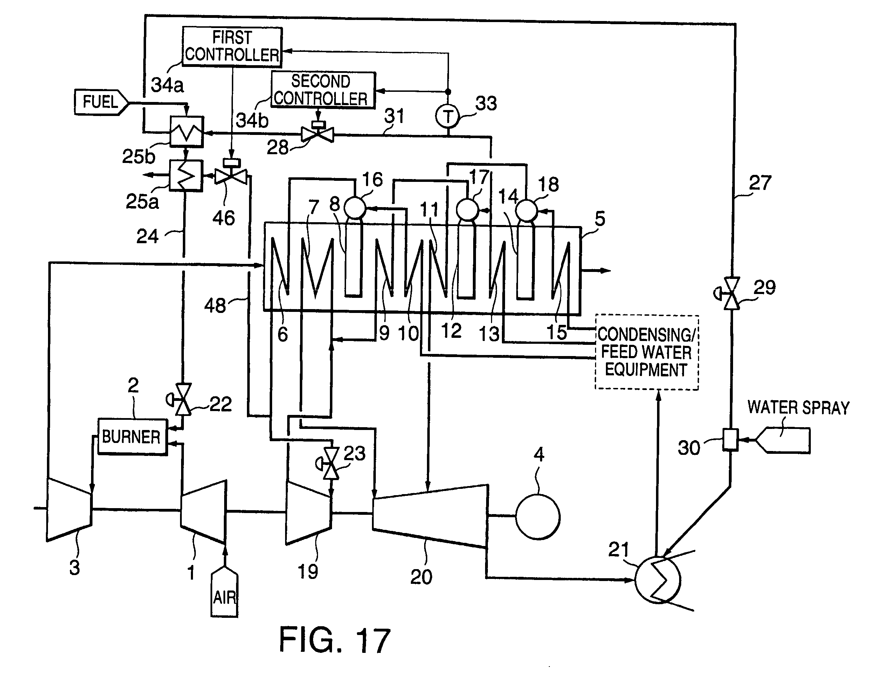

In this embodiment shown in FIG. 15, a method to use auxiliary steam as a heating medium at the beginning when the operation is started. But instead of this method, the exhaust steam from high pressure turbine 19 may be used as a heating medium at the beginning when the operation is started. Instead of this method high pressure steam that is led to the inlet of high pressure turbine 19 may be used as an initial heating medium. The embodiments when this exhaust steam and high pressure steam are used are shown in FIG. 16 and FIG. 17, respectively. As illustrated in FIG. 16, a heating medium line is composed of extraction steam pipe 47 communicating the exhaust line of high pressure turbine 19 and first fuel heater 25a. In FIG. 17, a heating medium line is composed of extraction steam pipe 48 communicating the high pressure steam line of high pressure turbine 19 and first fuel heater 25a.

Further, in this embodiment, a method to change over heating mediums step by step according to a temperature signal detected by temperature detector 33 is described. But instead of this method, it is possible to change over heating mediums step by step using detection signals shown below. That is, if the internal pressure in intermediate pressure drum 17 exceeds a predetermined pressure, a heating medium may be changed over according to a detected pressure signal from a pressure detector (not shown). Further, when a certain time passes after exhaust heat recovery boiler 5 is started to operate, heating mediums may be changed over according to a clocking time over signal from a timer (not shown). Further, when a plant comes to a specified state, for instance, when it reaches the minimum load state, heating mediums may be changed over according to a detected load signal. In any method, it is possible to obtain an effect similar to that in the above embodiment.

Thus, according to this embodiment, it is possible to recover the heat retained in the exhaust gas of gas turbine 3 effectively through feed water or steam used as a heating medium and it becomes possible to improve thermal efficiency of a combined cycle power plant.

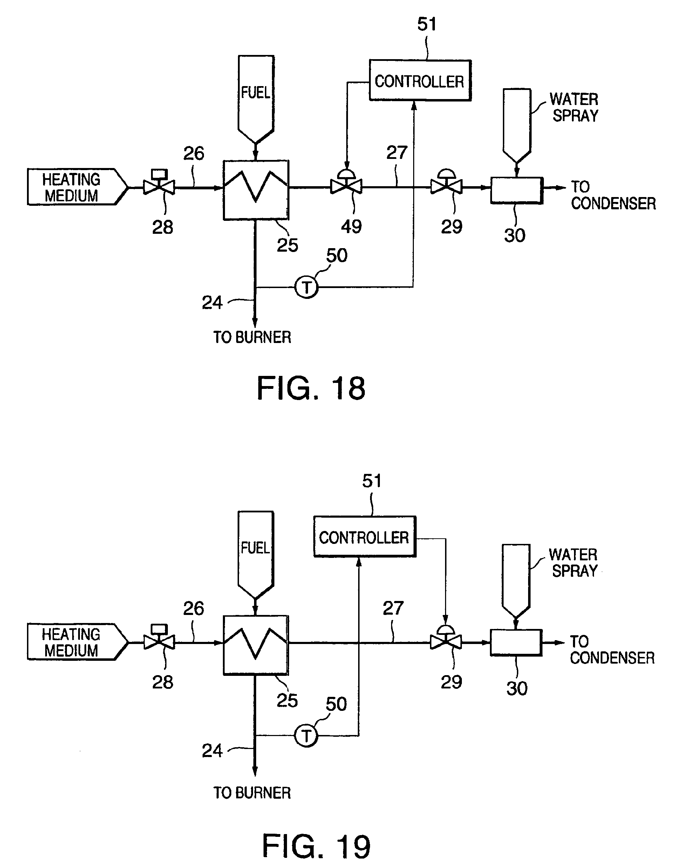

FIG. 18 shows a system construction of a part of a combined cycle power plant according to another different embodiment of the present invention. In FIG. 18, low temperature feed water pipe 27 of the heating medium line is provided with a control valve 49, which controls the flow rate of feed water in the system. This control valve 49 is provided with a controller 51, which outputs a position signal to change the position of control valve 49 according to a temperature signal from a temperature detector 50, which detects a heated fuel temperature.

In this embodiment in the structure as described above, an actual temperature signal from temperature detector 50 which detects a fuel temperature is input to controller 51, and is compared with a set value. If, for instance, a value of the actual temperature signal is larger than a set value, controller 51 outputs a position signal to control valve 49 to make the position narrower than before. On the contrary, if a value of the actual temperature signal is smaller than the set value, controller 51 outputs a position signal to control valve 49 to make the position wider than before. Thus, a fuel temperature is controlled to a pre-determined temperature.

By providing such a controller, it becomes possible to control fuel temperature more precisely and to maintain fuel temperature at a constant level more steadily. This embodiment is composed using a single control valve 49. But in addition to this control valve 49, a bypass valve (not shown) may be provided in the additional route to bypass fuel heater 25 to control the flow rate of heating medium in cooperation with control valve 49.

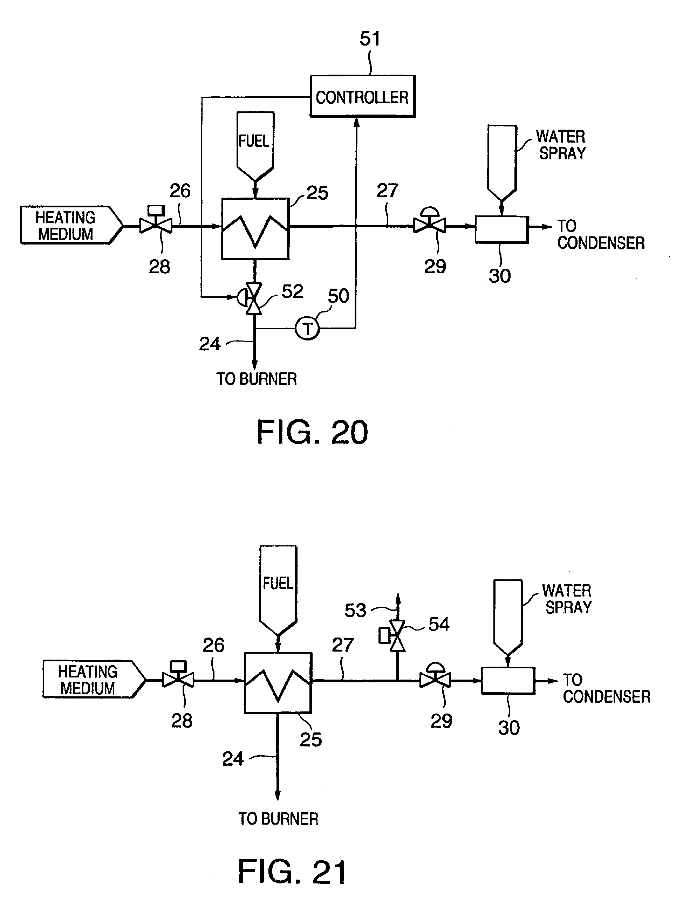

Further, using such controller 51 as described above and without control valve 49, it may be composed to change the position of depressurizing valve 29 as shown in FIG. 19. Further, it is also possible to change the flow rate of fuel using such controller 51 as described above. In this case, as shown in FIG. 20, a control valve 52 is provided in fuel line 24, and control valve 49 is not provided in low temperature feed water pipe 27. Further, in addition to control valve 52, a bypass valve (not shown) may be provided in the additional route to bypass fuel heater 25 so as to control the flow rate of fuel in cooperation with control valve 52.

Thus, according to these embodiments, it is possible to control a temperature of fuel to be fed to burner 2 more precisely.

Further, another different embodiment of the present invention will be described. In FIG. 21, a drain pipe 53 is connected to low temperature feed water pipe 27 of the heating medium line to discharge feed water in the system. In the route of this drain pipe 53, a drain valve 54 is provided.

In the above structure, drain valve 54 of drain pipe 53 is kept open before feed water is led as a heating medium to high temperature feed water pipe 26. At this time, depressurizing valve 29 is kept closed. With the start of heating of fuel, feed water flows to high temperature feed water pipe 26 and at this time, drain accumulated in the system is discharged into drain pipe 53 from low temperature feed water pipe 27. Thus, the generation of the water hammer phenomenon can be prevented. Hereafter, depressurizing valve 29 is opened and drain valve 54 is fully closed, accordingly.

Thus, according to this embodiment, it is possible to prevent the water hammer phenomenon caused by the accumulated drain in the heating medium line at the time when fuel heater 25 is started.

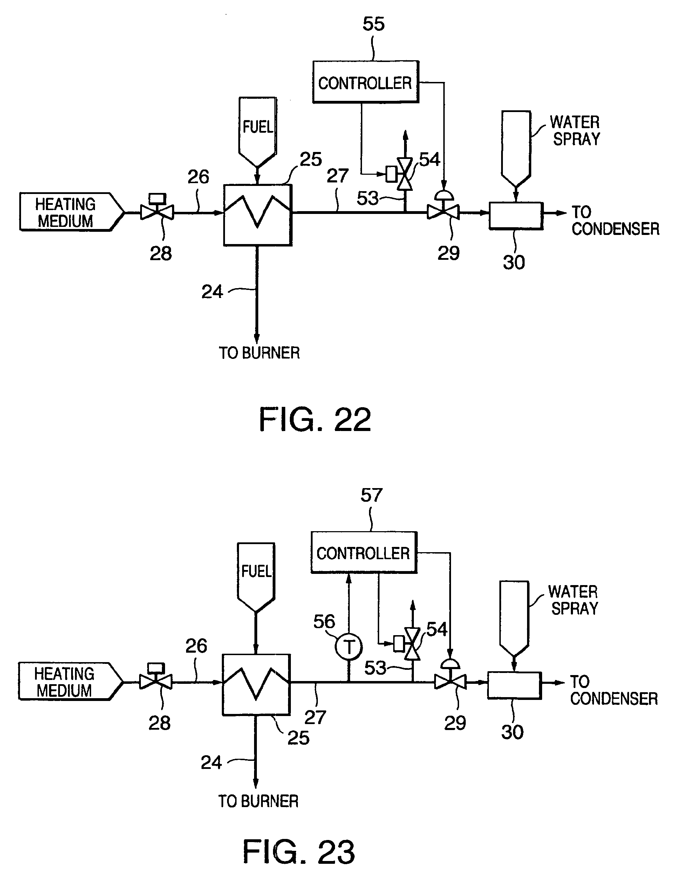

Further, another different embodiment of the present invention will be described. In FIG. 22, a controller 55 is provided which outputs control signals to open/close drain valve 54 and depressurizing valve 29, according to a clocking time over signal of a timer (not shown).

In the above structure, before feed water is led to high temperature feed water pipe 26, drain valve 54 of drain pipe 53 is opened by the control signal from controller 55. At this time, depressurizing valve 29 is kept fully closed and at the same time, the timer is turned ON and the clocking starts.

With the start of the heating of fuel, feed water flows to high temperature feed water pipe 26 and accumulated drain in the system is discharged into drain pipe 53 from low temperature feed water pipe 27. Thus, the generation of the water hammer phenomenon in the system can be prevented. Hereafter, with the time over of the clocking by the timer, control signals are output to drain valve 54 and depressurizing valve 29, respectively and depressurizing valve 29 is opened and drain valve 54 is fully closed. In other words, drain valve 53 and depressurizing valve 29 are automatically operated by the output of the timer.

Thus, according to this embodiment, the water hammer phenomenon generated by the accumulated drain in the heating medium line can be effectively prevented when fuel heater 25 is started.

Further, another different embodiment of the present invention will be described. In FIG. 23, a controller 57 is provided which outputs control signals to open/close drain valve 54 and depressurizing valve 29 according to a detected temperature signal from a temperature detector 56 which detects a temperature of feed water flowing through the system.

In the above structure, before feed water flows into high temperature feed water pipe 26, the temperature in the system is low. At this time, drain valve 54 is kept fully opened by an opening signal given from controller 57 according to the detected temperature signal of temperature detector 56, and on the other hand, depressurizing valve 29 is kept closed by a closing signal from controller 57 according to the detected temperature signal. In order to heat fuel, high temperature feed water flows into high temperature feed water pipe 26 under this state. This feed water passes through fuel heater 25, and after heating fuel, flows into low temperature feed water pipe 27. At this time, the accumulated drain in the system is discharged into drain pipe 53. Thus, the water hammer phenomenon generated in the system can be prevented.

With the inflow of feed water, the internal temperature of the system rises and temperature detector 56 detects the raised temperature. This detected temperature signal is given to controller 57. If the detected temperature exceeds a predetermined temperature, an opening signal is output from controller 57 to depressurizing valve 29, and at the same time a closing signal is output to drain valve 54. As a result, depressurizing valve 29 opens slowly and drain valve 54 closes. At this time, the feed water passes through depressurizing valve 29 and flows to the condenser after passing through desuperheater 30.

Thus, in this embodiment, drain valve 54 and depressurizing valve 29 can be automatically operated by the output of temperature detector 56 which detects the internal temperature of the system.

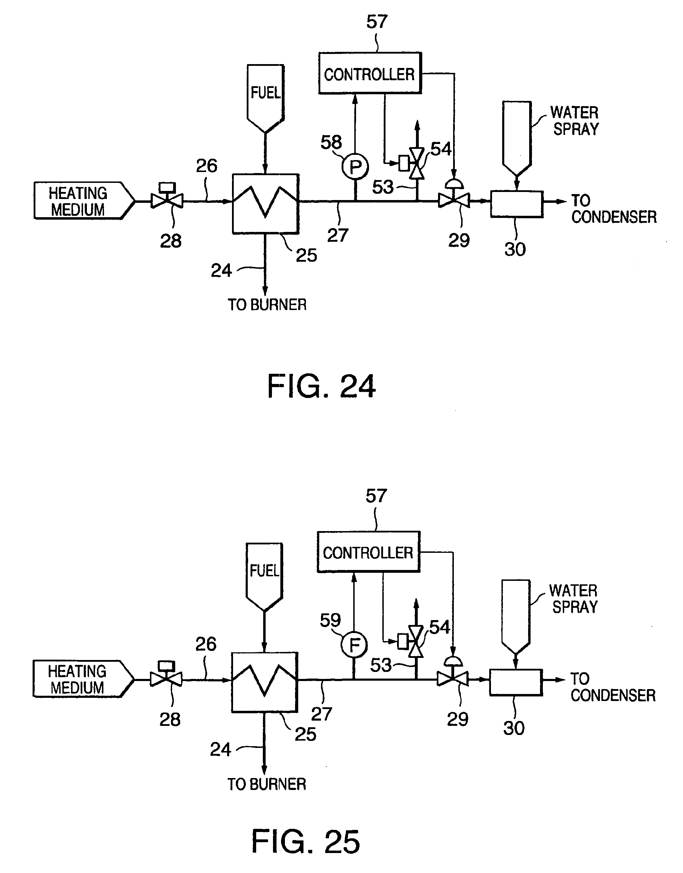

In this embodiment shown in FIG. 23, when drain valve 54 and depressurizing valve 29 are operated, a method to operate them automatically according to a signal of temperature detected by temperature detector 56 is described. But instead of this method, they can be operated automatically according to a method to detect an increase in the internal line pressure increase or change in feed water flow rate. FIG. 24 shows the structure when drain valve 54 and depressurizing valve 29 are operated by controller 57 according to a detected pressure signal using a pressure detector 58 to detect the internal line pressure. FIG. 25 shows the structure when they are operated by controller 57 according to a detected flow rate signal using a flow rate detector 59 to detect feed water flow rate in the system. In both methods, the same effect can be obtained as in the above embodiment.

Thus, according to these embodiments, the water hammer phenomenon generated by accumulated drain in the heating medium line of fuel heater 25 can be prevented effectively.

It is noted that any of the embodiments shown in FIGs. 18-25 can be applied to any of the embodiments shown in FIGs. 1-17.

As described above, according to the present invention, as the fuel line of the burner is provided with the fuel heating line to heat fuel, it is possible to recover heat retained in the exhaust gas of the gas turbine effectively via feed water or steam from the exhaust heat recovery boiler and to improve thermal efficiency of a combined cycle power plant without increasing the inlet temperature of the gas turbine.

## Claims

1. A combined cycle power plant, comprising:
a burner (2);
a gas turbine (3) to generate power by expanding high temperature combustion gas from said burner;
an exhaust heat recovery boiler (5) to generate steam by heating feed water by exhaust gas discharged from said gas turbine;
a steam turbine (20) to generate power by expanding said steam supplied from said exhaust heat recovery boiler;
said exhaust heat recovery boiler (5) having high pressure, intermediate pressure and low pressure lines, each of which including an economizer (10, 13, 15), a drum (16, 17, 18), an evaporator (8, 12, 14) and a superheater (6, 9, 11) to generate different pressure steam, respectively;
said feed water sent to said economizers (10, 13, 15) of said high pressure, intermediate pressure and low pressure lines being heated by said exhaust gas from said gas turbine (3) and supplied to said drums (16, 17, 18) in said respective pressure lines;
a fuel heating line provided in a fuel line (24) of said burner (2) to heat fuel supplied to said burner (2);
**characterized in that** said fuel heating line includes a fuel heater (25) which is adapted to
heat said fuel by said feed water extracted from an outlet of said economizer of said intermediate pressure line or said high pressure line of said exhaust heat recovery boiler; and said fuel heating line includes:
a feed water heater (35) to heat said feed water flowing into said fuel heater by steam.

2. The combined cycle power plant according to claim 1,
wherein said feed water heater (35) heats said feed water flowing into said fuel heater by auxiliary steam led from a header (36).

3. The combined cycle power plant according to claim 2,
wherein said fuel heating line further includes:
an extraction steam valve (38) to supply said auxiliary steam to said feed water heater (35), and
a controller (34) to output a control signal to open/close said extraction steam valve according to an outlet feed water temperature signal of said economizer of said intermediate pressure line; and
wherein in said fuel heating line,
when an outlet feed water temperature of said economizer (13) of said intermediate pressure line does not reach a pre-determined temperature, said extraction steam valve (38) is opened by said control signal from said controller (34) to supply said auxiliary steam to said feed water heater (35), and
when said outlet feed water temperature of said economizer exceeds said pre-determined temperature, said extraction steam valve (38) is closed by said control signal from said controller (34) to stop supplying said auxiliary steam to said feed water heater (35).

4. The combined cycle power plant according to claim 1,
wherein said feed water heater (35) heats said feed water flowing into said fuel heater by one of exhaust steam from a high pressure portion of said steam turbine and extraction steam from a high pressure steam line.

5. The combined cycle power plant according to claim 4,
wherein said fuel heating line further includes:
an extraction steam valve (38) to supply one of said exhaust steam from said high pressure portion of said steam turbine and said extraction steam from said high pressure steam line to said feed water heater (35), and
a controller (34) to output a control signal to open/close said extraction steam valve according to an outlet feed water temperature signal of said economizer (13) of said intermediate pressure line; and
wherein in said fuel heating line,
when an outlet feed water temperature of said economizer (13) of said intermediate pressure line does not reach a pre-determined temperature, said extraction steam valve (38) is opened by said control signal from said controller (34) to supply one of said exhaust steam from said high pressure portion of said steam turbine and said extraction steam from said high pressure steam to said feed water heater (35), and
when said outlet feed water temperature of said economizer (13) exceeds said pre-determined temperature, said extraction steam valve (38) is closed by said control signal from said controller (34) to stop supplying one of said exhaust steam from said high pressure portion of said steam turbine and said extraction steam from said high pressure steam to said feed water heater (35).

6. The combined cycle power plant according to claim 1,
wherein said feed water heater (35) heats said feed water flowing into said fuel heater (25) by flash steam generated from said feed water extracted from an outlet of said economizer (10) of said high pressure line of said exhaust heat recovery boiler.

7. The combined cycle power plant according to claim 6,
wherein said fuel heating line further includes:
a main hot water valve (42) to supply hot water to said feed water heater (35) to generate flash steam, and
a controller (34) to output a control signal to open/close said main hot water valve (42) according to an outlet feed water temperature signal of said economizer (13) of said intermediate pressure line; and
wherein in said fuel heating line,
when an outlet feed water temperature of said economizer (13) of said intermediate pressure line does not reach a pre-determined temperature, said main hot water valve (42) is opened by said control signal from said controller (34) to supply said hot water to said feed water heater (35), and
when said outlet feed water temperature of said economizer (13) exceeds said pre-determined temperature, said main hot water valve (42) is closed by said control signal from said controller (34) to stop supplying said hot water to said feed water heater (35).

8. A combined cycle power plant, comprising:
a burner (2);
a gas turbine (3) to generate power by expanding high temperature combustion gas from said burner;
an exhaust heat recovery boiler (5) to generate steam by heating feed water by exhaust gas discharged from said gas turbine;
a steam turbine (20) to generate power by expanding said steam supplied from said exhaust heat recovery boiler;
said exhaust heat recovery boiler (5) having high pressure, intermediate pressure and low pressure lines, each of which including an economizer (10, 13, 15), a drum (16, 17, 18), an evaporator (8, 12, 14) and a superheater (6, 9, 11) to generate different pressure steam, respectively;
said feed water sent to said economizers (10, 13, 15) of said high pressure, intermediate pressure and low pressure lines being heated by said exhaust gas from said gas turbine (3) and supplied to said drums (16, 17, 18) in said respective pressure lines;
a fuel heating line provided in a fuel line (24) of said burner (2) to heat fuel supplied to said burner (2);
**characterized in that** said fuel heating line includes a fuel heater (25) to heat said fuel by said feed water extracted from an outlet of said economizer of said high pressure line; and
wherein said fuel heater is adapted to heat said fuel by flash steam generated from said feed water extracted from an outlet of said economizer (10) of said high pressure line of said exhaust heat recovery boiler (5).

9. The combined cycle power plant according to one of claims 1 to 8, wherein said fuel heating line further includes:
a drain valve (54) to discharge drain generated when a heating medium composed of at least one of said feed water and said steam is condensed in a heating medium line of said fuel heater (25); and
a depressurizing valve (29) to control a pressure of said heating medium flowing in said heating medium line.

10. The combined cycle power plant according to claim 9,
wherein said fuel heating line further includes a controller (55) to output a control signal to open/close said drain valve (54) and said depressurizing valve (29) according to a clocking time over signal of a timer; and
wherein in said fuel heating line, said drain valve is opened and said depressurizing valve is closed during a specified clocking time after said fuel heater is started to discharge drain accumulated in said heating medium line.

11. The combined cycle power plant according to claim 9,
wherein said fuel heating line further includes a controller (57) to output a control signal to open/close said drain valve (54) and said depressurizing valve (29) according to an internal temperature signal of said heating medium line; and
wherein in said fuel heating line, said drain valve is opened and said depressurizing valve is closed during a specified time after said fuel heater is started until an internal temperature exceeds a pre-determined temperature to discharge drain accumulated in said heating medium line.

12. The combined cycle power plant according to claim 11,
wherein said fuel heating line further includes a controller (57) to output a control signal to open/close said drain valve (34) and said depressurizing valve (29) according to an internal pressure signal of said heating medium line, instead of said controller (57); and
wherein in said fuel heating line, said drain valve is opened and said depressurizing valve is closed during a specified time after said fuel heater is started until said internal pressure exceeds a pre-determined pressure to discharge said drain accumulated in said heating medium line.

13. The combined cycle power plant according to claim 11,
wherein said fuel heating line further includes a controller (57) to output a control signal to open/close said drain valve (54) and said depressurizing valve (29) according to a flow rate signal of said heating medium flowing in said heating medium line, instead of said controller (57); and
wherein in said fuel heating line, said drain valve is opened and said depressurizing valve is closed during a specified time after said fuel heater is started until said flow rate of said heating medium exceeds a pre-determined flow rate to discharge said drain accumulated in said heating medium line.

## Patentansprüche

1. Kraftwerk mit kombiniertem Zyklus, mit:
einem Brenner (2);
einer Gasturbine (3), um Energie durch ein Expandieren von Hochtemperatur-Verbrennungsgas von dem Brenner zu erzeugen;
einem Abgaswärmerückgewinnungskessel (5), um Dampf durch ein Erwärmen von Speisewasser durch von der Gasturbine abgelassenes Abgas zu erzeugen;
einer Dampfturbine (20), um Energie durch ein Expandieren des von dem Abgaswärmerückgewinnungskessel zugeführten Dampfes zu erzeugen;
wobei der Abgaswärmerückgewinnungskessel (5) Hochdruck-, Zwischendruck- und Niederdruckleitungen aufweist, von denen jede einen Abgasvorwärmer (10, 13, 15), eine Trommel (16, 17, 18), einen Verdampfer (8, 12, 14) und einen Überhitzer (6, 9, 11) umfasst, um Dampf mit jeweils unterschiedlichem Druck zu erzeugen;
wobei das an die Abgasvorwärmer (10, 13, 15) der Hochdruck-, Zwischendruck- und Niederdruckleitungen geschickte Speisewasser durch das Abgas von der Gasturbine (3) erwärmt wird, und den Trommeln (16, 17, 18) in den jeweiligen Druckleitungen zugeführt wird;
einer Kraftstofferwärmungsleitung, die in einer Kraftstoffleitung (24) des Brenners (2) vorgesehen ist, um einen dem Brenner (2) zugeführten Kraftstoff zu erwärmen;
**dadurch gekennzeichnet, dass** die Kraftstofferwärmungsleitung eine Kraftstoffheizvorrichtung (25) umfasst, die geeignet ist, den Kraftstoff durch das von einem Auslass des Abgasvorwärmers von der Zwischendruckleitung oder der Hochdruckleitung des Abgaswärmerückgewinnungskessels entnommene Speisewasser zu erwärmen; und wobei die Kraftstofferwärmungsleitung umfasst:
eine Speisewasserheizvorrichtung (35), um das Speisewasser, das in die Kraftstoffheizvorrichtung fließt, durch Dampf zu erwärmen.

2. Kraftwerk mit kombiniertem Zyklus nach Anspruch 1,
bei dem die Speisewasserheizvorrichtung (35) das Speisewasser, das in die Kraftstoffheizvorrichtung fließt, durch von einem Sammler (36) geführten Zusatzdampf erwärmt.

3. Kraftwerk mit kombiniertem Zyklus nach Anspruch 2,
bei dem die Kraftstofferwärmungsleitung ferner umfasst:
ein Entnahmedampfventil (38), um den Zusatzdampf der Speisewasserheizvorrichtung (35) zuzuführen, und
ein Steuergerät (34), um ein Steuersignal auszugeben, um das Entnahmedampfventil gemäß einem Auslassspeisewasser-Temperatursignal von dem Abgasvorwärmer der Zwischendruckleitung zu öffnen/schließen; und
wobei in der Kraftstofferwärmungsleitung,
wenn eine Auslassspeisewasser-Temperatur des Abgasvorwärmers (13) von der Zwischendruckleitung eine vorbestimmte Temperatur nicht erreicht, das Entnahmedampfventil (38) durch das Steuersignal von dem Steuergerät (34) geöffnet wird, um den Zusatzdampf der Speisewasserheizvorrichtung (35) zuzuführen, und
wenn die Auslassspeisewasser-Temperatur des Abgasvorwärmers die vorbestimmte Temperatur übersteigt, das Entnahmedampfventil (38) durch das Steuersignal von dem Steuergerät (34) geschlossen wird, um ein Zuführen des Zusatzdampfes an die Speisewasserheizvorrichtung (35) zu stoppen.

4. Kraftwerk mit kombiniertem Zyklus nach Anspruch 1,
bei dem die Speisewasserheizvorrichtung (35) das Speisewasser, das in die Kraftstoffheizvorrichtung fließt, durch Abgasdampf von einem Hochdruckabschnitt der Dampfturbine, oder Entnahmedampf von einer Hochdruckdampfleitung, erwärmt.

5. Kraftwerk mit kombiniertem Zyklus nach Anspruch 4,
bei dem die Kraftstofferwärmungsleitung ferner umfasst:
ein Entnahmedampfventil (38), um den Abgasdampf von dem Hochdruckabschnitt der Dampfturbine, oder den Entnahmedampf von der Hochdruckdampfleitung, der Speisewasserheizvorrichtung (35) zuzuführen, und
ein Steuergerät (34), um ein Steuersignal auszugeben, um das Entnahmedampfventil gemäß einem Auslassspeisewasser-Temperatursignal von dem Abgasvorwärmer (13) der Zwischendruckleitung zu öffnen/schließen; und
wobei in der Kraftstofferwärmungsleitung,
wenn eine Auslassspeisewasser-Temperatur des Abgasvorwärmers (13) von der Zwischendruckleitung eine vorbestimmte Temperatur nicht erreicht, das Entnahmedampfventil (38) durch das Steuersignal von dem Steuergerät (34) geöffnet wird, um den Abgasdampf von dem Hochdruckabschnitt der Dampfturbine, oder den Entnahmedampf von der Hochdruckdampfleitung, der Speisewasserheizvorrichtung (35) zuzuführen, und
wenn die Auslassspeisewasser-Temperatur des Abgasvorwärmers (13) die vorbestimmte Temperatur übersteigt, das Entnahmedampfventil (38) durch das Steuersignal von dem Steuergerät (34) geschlossen wird, um ein Zuführen des Abgasdampfes von dem Hochdruckabschnitt der Dampfturbine, oder des Entnahmedampfes von der Hochdruckdampfleitung, an die Speisewasserheizvorrichtung (35) zu stoppen.

6. Kraftwerk mit kombiniertem Zyklus nach Anspruch 1,
bei dem die Speisewasserheizvorrichtung (35) das Speisewasser erwärmt, das in die Kraftstoffheizvorrichtung (25) fließt, durch Entspannungsdampf, der von dem Speisewasser erzeugt wird, das von einem Auslass des Abgasvorwärmers (10) von der Hochdruckleitung des Abgaswärmerückgewinnungskessels entnommen ist.

7. Kraftwerk mit kombiniertem Zyklus nach Anspruch 6,
bei dem die Kraftstofferwärmungsleitung ferner umfasst:
ein Hauptwarmwasserventil (42), um Warmwasser an die Speisewasserheizvorrichtung (35) zuzuführen, um Entspannungsdampf zu erzeugen, und
ein Steuergerät (34), um ein Steuersignal auszugeben, um das Hauptwarmwasserventil (42) gemäß einem Auslassspeisewasser-Temperatursignal von dem Abgasvorwärmer (13) der Zwischendruckleitung zu öffnen/schließen; und
wobei in der Kraftstofferwärmungsleitung,
wenn eine Auslassspeisewasser-Temperatur des Abgasvorwärmers (13) von der Zwischendruckleitung eine vorbestimmte Temperatur nicht erreicht, das Hauptwarmwasserventil (42) durch das Steuersignal von dem Steuergerät (34) geöffnet wird, um das Warmwasser der Speisewasserheizvorrichtung (35) zuzuführen, und
wenn die Auslassspeisewasser-Temperatur des Abgasvorwärmers (13) die vorbestimmte Temperatur übersteigt, das Hauptwarmwasserventil (42) durch das Steuersignal von dem Steuergerät (34) geschlossen wird, um ein Zuführen des Warmwassers an die Speisewasserheizvorrichtung (35) zu stoppen.

8. Kraftwerk mit kombiniertem Zyklus, mit:
einem Brenner (2);
einer Gasturbine (3), um Energie durch ein Expandieren von Hochtemperatur-Verbrennungsgas von dem Brenner zu erzeugen;
einem Abgaswärmerückgewinnungskessel (5), um Dampf durch ein Erwärmen von Speisewasser durch von der Gasturbine abgelassenes Abgas zu erzeugen;
einer Dampfturbine (20), um Energie durch ein Expandieren des von dem Abgaswärmerückgewinnungskessel zugeführten Dampfes zu erzeugen;
wobei der Abgaswärmerückgewinnungskessel (5) Hochdruck-, Zwischendruck- und Niederdruckleitungen aufweist, von denen jede einen Abgasvorwärmer (10, 13, 15), eine Trommel (16, 17, 18), einen Verdampfer (8, 12, 14) und einen Überhitzer (6, 9, 11) umfasst, um Dampf mit jeweils unterschiedlichem Druck zu erzeugen;
wobei das an die Abgasvorwärmer (10, 13, 15) der Hochdruck-, Zwischendruck- und Niederdruckleitungen geschickte Speisewasser durch das Abgas von der Gasturbine (3) erwärmt wird, und den Trommeln (16, 17, 18) in den jeweiligen Druckleitungen zugeführt wird;
einer Kraftstofferwärmungsleitung, die in einer Kraftstoffleitung (24) des Brenners (2) vorgesehen ist, um einen dem Brenner (2) zugeführten Kraftstoff zu erwärmen;
**dadurch gekennzeichnet, dass** die Kraftstofferwärmungsleitung eine Kraftstoffheizvorrichtung (25) umfasst, um den Kraftstoff durch das von einem Auslass des Abgasvorwärmers von der Hochdruckleitung entnommene Speisewasser zu erwärmen; und
wobei die Kraftstoffheizvorrichtung geeignet ist, den Kraftstoff durch einen Entspannungsdampf zu erwärmen, der von dem Speisewasser erzeugt wird, das von einem Auslass des Abgasvorwärmers (10) von der Hochdruckleitung des Abgaswärmerückgewinnungskessels (5) entnommen ist.

9. Kraftwerk mit kombiniertem Zyklus nach einem der Ansprüche 1 bis 8, bei dem die Kraftstofferwärmungsleitung ferner umfasst:
ein Abflussventil (54), um einen Abfluss abzulassen, der erzeugt wird wenn ein Erwärmungsmedium, das aus dem Speisewasser und/oder dem Dampf besteht, in einer Erwärmungsmediumleitung der Kraftstoffheizvorrichtung (25) kondensiert wird; und
ein Druckherabsetzungsventil (29), um einen Druck des Erwärmungsmediums, das in der Erwärmungsmediumleitung fließt, zu steuern.

10. Kraftwerk mit kombiniertem Zyklus nach Anspruch 9,
bei dem die Kraftstofferwärmungsleitung ferner ein Steuergerät (55) umfasst, um ein Steuersignal auszugeben, um das Abflussventil (54) und das Druckherabsetzungsventil (29) gemäß einer Taktzeit über ein Signal eines Zeitgebers zu öffnen/schließen; und
wobei in der Kraftstofferwärmungsleitung das Abflussventil geöffnet ist und das Druckherabsetzungsventil geschlossen ist, während einer spezifizierten Taktzeit, nachdem die Kraftstoffheizvorrichtung gestartet ist, um in der Erwärmungsmediumleitung angesammelten Abfluss abzulassen.

11. Kraftwerk mit kombiniertem Zyklus nach Anspruch 9,
bei dem die Kraftstofferwärmungsleitung ferner ein Steuergerät (57) umfasst, um ein Steuersignal auszugeben, um das Abflussventil (54) und das Druckherabsetzungsventil (29) gemäß eines Innentemperatursignals der Erwärmungsmediumleitung zu öffnen/schließen; und
wobei in der Kraftstofferwärmungsleitung das Abflussventil geöffnet ist und das Druckherabsetzungsventil geschlossen ist, während einer spezifizierten Zeit, nachdem die Kraftstoffheizvorrichtung gestartet ist, bis eine Innentemperatur eine vorbestimmte Temperatur übersteigt, um in der Erwärmungsmediumleitung angesammelten Abfluss abzulassen.

12. Kraftwerk mit kombiniertem Zyklus nach Anspruch 11,
bei dem die Kraftstofferwärmungsleitung ferner ein Steuergerät (57) umfasst, um ein Steuersignal auszugeben, um das Abflussventil (34) und das Druckherabsetzungsventil (29) gemäß eines Innendrucksignals der Erwärmungsmediumleitung zu öffnen/schließen, anstelle des Steuergeräts (57); und
wobei in der Kraftstofferwärmungsleitung das Abflussventil geöffnet ist und das Druckherabsetzungsventil geschlossen ist, während einer spezifizierten Zeit, nachdem die Kraftstoffheizvorrichtung gestartet ist, bis der Innendruck einen vorbestimmten Druck übersteigt, um in der Erwärmungsmediumleitung angesammeltes Abwasser abzulassen.

13. Kraftwerk mit kombiniertem Zyklus nach Anspruch 11,
bei dem die Kraftstofferwärmungsleitung ferner ein Steuergerät (57) umfasst, um ein Steuersignal auszugeben, um das Abflussventil (54) und das Druckherabsetzungsventil (29) gemäß eines Durchflusssignals des Erwärmungsmediums, das in der Erwärmungsmediumleitung fließt, zu öffnen/schließen, anstelle des Steuergeräts (57); und
wobei in der Kraftstofferwärmungsleitung das Abflussventil geöffnet ist und das Druckherabsetzungsventil geschlossen ist, während einer spezifizierten Zeit, nachdem die Kraftstoffheizvorrichtung gestartet ist, bis der Durchfluss des Erwärmungsmediums einen vorbestimmten Durchfluss übersteigt, um in der Erwärmungsmediumleitung angesammelten Abfluss abzulassen.

## Revendications

1. Centrale thermique à cycle combiné, comportant :
un brûleur (2);
une turbine à gaz (3) destinée à générer de l'énergie par détente de gaz de combustion à haute température provenant dudit brûleur;
une chaudière de récupération de chaleur d'échappement (5) destinée à générer de la vapeur en chauffant de l'eau d'alimentation avec les gaz d'échappement libérés par ladite turbine à gaz;
une turbine à vapeur (20) destinée à générer de l'énergie par détente de ladite vapeur délivrée par ladite chaudière de récupération de chaleur d'échappement;
ladite chaudière de récupération de chaleur d'échappement (5) ayant des conduites de haute pression, de pression intermédiaire et de basse pression, chacune d'elles comprenant un économiseur (10, 13, 15), un tambour (16, 17, 18), un évaporateur (8, 12, 14) et un surchauffeur (6, 9, 11) afin de générer de la vapeur à pression différente, de manière respective;
ladite eau d'alimentation envoyée vers lesdits économiseurs (10, 13, 15) desdites conduites de haute pression, de pression intermédiaire et de basse pression étant chauffée par lesdits gaz d'échappement provenant de ladite turbine à gaz (3) et délivrée aux dits tambours (16, 17, 18) dans lesdites conduites de pression respectives;
une conduite de chauffage de combustible prévue dans une conduite de combustible (24) dudit brûleur (2) afin de chauffer le combustible délivré au dit brûleur (2);
**caractérisée en ce que** ladite conduite de chauffage de combustible comprend un dispositif de chauffage de combustible (25) qui est prévu pour chauffer ledit combustible grâce à ladite eau d'alimentation extraite d'une sortie dudit économiseur de ladite conduite de pression intermédiaire ou de ladite conduite de haute pression de ladite chaudière de récupération de chaleur d'échappement; et ladite conduite de chauffage de carburant comprend :
un dispositif de chauffage d'eau d'alimentation (35) afin de chauffer ladite eau d'alimentation qui s'écoule dans ledit dispositif de chauffage de combustible grâce à la vapeur.

2. Centrale thermique à cycle combiné selon la revendication 1, dans laquelle ledit dispositif de chauffage d'eau d'alimentation (35) chauffe ladite eau d'alimentation qui s'écoule dans ledit dispositif de chauffage de combustible grâce à de la vapeur auxiliaire provenant d'un collecteur (36).

3. Centrale thermique à cycle combiné selon la revendication 2, dans laquelle ladite conduite de chauffage de combustible comprend en outre :
une soupape de vapeur d'extraction (38) destinée à délivrer ladite vapeur auxiliaire au dit dispositif de chauffage d'eau d'alimentation (35), et
un dispositif de commande (34) destiné à délivrer un signal de commande afin d'ouvrir/fermer ladite soupape de vapeur d'extraction en fonction d'un signal de température d'eau d'alimentation de sortie dudit économiseur de ladite conduite de pression intermédiaire; et
dans laquelle, dans ladite conduite de chauffage de combustible,
lorsqu'une température d'eau d'alimentation de sortie dudit économiseur (13) de ladite conduite de pression intermédiaire n'atteint pas une température prédéterminée, ladite soupape de vapeur d'extraction (38) est ouverte par ledit signal de commande provenant dudit dispositif de commande (34) afin de délivrer ladite vapeur auxiliaire au dit dispositif de chauffage d'eau d'alimentation (35), et
lorsque ladite température d'eau d'alimentation de sortie dudit économiseur dépasse ladite température prédéterminée, ladite soupape de vapeur d'extraction (38) est fermée par ledit signal de commande provenant dudit dispositif de commande (34) afin d'arrêter l'alimentation de ladite vapeur auxiliaire vers ledit dispositif de chauffage d'eau d'alimentation (35).

4. Centrale thermique à cycle combiné selon la revendication 1, dans laquelle ledit dispositif de chauffage d'eau d'alimentation (35) chauffe ladite eau d'alimentation qui s'écoule dans ledit dispositif de chauffage de combustible grâce à de la vapeur d'échappement provenant d'une partie à haute pression de ladite turbine à vapeur ou de la vapeur d'extraction provenant d'une conduite de vapeur à haute pression.

5. Centrale thermique à cycle combiné selon la revendication 4, dans laquelle ladite conduite de chauffage de combustible comprend en outre :
une soupape de vapeur d'extraction (38) destinée à délivrer ladite vapeur d'échappement provenant de ladite partie à haute pression de ladite turbine à vapeur ou ladite vapeur d'extraction provenant de ladite conduite de vapeur à haute pression au dit dispositif de chauffage d'eau d'alimentation (35), et
un dispositif de commande (34) destiné à délivrer un signal de commande afin d'ouvrir/fermer ladite soupape de vapeur d'extraction en fonction d'un signal de température d'eau d'alimentation de sortie dudit économiseur (13) de ladite conduite de pression intermédiaire; et
dans laquelle, dans ladite conduite de chauffage de combustible, lorsqu'une température d'eau d'alimentation de sortie dudit économiseur (13) de ladite conduite de pression intermédiaire n'atteint pas une température prédéterminée, ladite soupape de vapeur d'extraction (38) est ouverte par ledit signal de commande provenant dudit dispositif de commande (34) afin de délivrer ladite vapeur d'échappement provenant de ladite partie à haute pression de ladite turbine à vapeur ou ladite vapeur d'extraction provenant de ladite vapeur à haute pression au dit dispositif de chauffage d'eau d'alimentation (35), et
lorsque la ladite température d'eau d'alimentation de sortie dudit économiseur (13) dépasse ladite température prédéterminée, ladite soupape de vapeur d'extraction (38) est fermée par ledit signal de commande provenant dudit dispositif de commande (34) afin d'arrêter de délivrer ladite vapeur de sortie provenant de ladite partie à haute pression de ladite turbine à vapeur ou ladite vapeur d'extraction provenant de ladite vapeur à haute pression au dit dispositif de chauffage d'eau d'alimentation (35).

6. Centrale thermique à cycle combiné selon la revendication 1, dans laquelle ledit dispositif de chauffage d'eau d'alimentation (35) chauffe ladite eau d'alimentation s'écoulant dans ledit dispositif de chauffage de combustible (25) grâce à de la vapeur instantanée générée par ladite eau d'alimentation extraite d'une sortie dudit économiseur (10) de ladite conduite de haute pression de ladite chaudière de récupération de chaleur d'échappement.

7. Centrale thermique à cycle combiné selon la revendication 6, dans laquelle ladite conduite de chauffage de combustible comprend en outre :
une soupape d'eau chaude principale (42) destinée à délivrer de l'eau chaude au dit dispositif de chauffage d'eau d'alimentation (35) afin de générer de la vapeur instantanée, et
un dispositif de commande (34) destiné à délivrer un signal de commande afin d'ouvrir/fermer ladite soupape d'eau chaude principale (42) en fonction d'un signal de température d'eau d'alimentation de sortie dudit économiseur (13) de ladite conduite de pression intermédiaire; et
dans laquelle, dans ladite conduite de chauffage de combustible, lorsqu'une température d'eau d'alimentation de sortie dudit économiseur (13) de ladite conduite de pression intermédiaire n'atteint pas une température prédéterminée, ladite soupape d'eau chaude principale (42) est ouverte par ledit signal de commande provenant dudit dispositif de commande (34) afin de délivrer ladite eau chaude au dit dispositif de chauffage d'eau d'alimentation (35), et
lorsque ladite température d'eau d'alimentation de sortie dudit économiseur (13) dépasse ladite température prédéterminée, ladite soupape d'eau chaude principale (42) est fermée par ledit signal de commande provenant dudit dispositif de commande (34) afin d'arrêter de délivrer ladite eau chaude au dit dispositif de chauffage d'eau d'alimentation (35).

8. Centrale thermique à cycle combiné, comportant :
un brûleur (2);
une turbine à gaz (3) destinée à générer de l'énergie par détente de gaz de combustion à haute température provenant dudit brûleur;
une chaudière de récupération de chaleur d'échappement (5) destinée à générer de la vapeur en chauffant de l'eau d'alimentation avec les gaz d'échappement libérés par ladite turbine à gaz;
une turbine à vapeur (20) destinée à générer de l'énergie par détente de ladite vapeur délivrée par ladite chaudière de récupération de chaleur d'échappement;
ladite chaudière de récupération de chaleur d'échappement (5) ayant des conduites de haute pression, de pression intermédiaire et de basse pression, chacune d'elles comprenant un économiseur (10, 13, 15), un tambour (16, 17, 18), un évaporateur (8, 12, 14) et un surchauffeur (6, 9, 11) afin de générer de la vapeur à pression différente, de manière respective;
ladite eau d'alimentation envoyée aux dits économiseurs (10, 13, 15) desdites conduites de haute pression, de pression intermédiaire et de basse pression étant chauffée par lesdits gaz d'échappement provenant de ladite turbine à gaz (3) et délivrée aux dits tambours (16, 17, 18) dans lesdites conduites de pression respectives;
une conduite de chauffage de combustible prévue dans une conduite de combustible (24) dudit brûleur (2) afin de chauffer du combustible délivré au dit brûleur (2);
**caractérisée en ce que** ladite conduite de chauffage de combustible comprend un dispositif de chauffage de combustible (25) destiné à chauffer ledit combustible grâce à ladite eau d'alimentation extraite d'une sortie dudit économiseur de ladite conduite à haute pression; et
dans laquelle ledit dispositif de chauffage de combustible est prévu pour chauffer ledit combustible grâce à de la vapeur instantanée générée par ladite eau d'alimentation extraite d'une sortie dudit économiseur (10) de ladite conduite à haute pression de ladite chaudière de récupération de chaleur d'échappement (5).

9. Centrale thermique à cycle combiné selon l'une des revendications 1 à 8, dans laquelle ladite conduite de chauffage de combustible comprend en outre :
une soupape de purge (54) destinée à évacuer le produit à purger généré lorsqu'un fluide de chauffage composé d'au moins ladite eau d'alimentation ou ladite vapeur est condensé dans une conduite de fluide de chauffage dudit dispositif de chauffage de combustible (25); et
une soupape de dépressurisation (29) destinée à commander une pression dudit fluide de chauffage qui s'écoule dans ladite conduite de fluide de chauffage.

10. Centrale thermique à cycle combiné selon la revendication 9, dans laquelle ladite conduite de chauffage de combustible comprend en outre un dispositif de commande (55) destiné à délivrer un signal de commande afin d'ouvrir/fermer ladite soupape de purge (54) et ladite soupape de dépressurisation (29) en fonction d'un signal d'écoulement de temps d'horloge provenant d'un temporisateur; et
dans laquelle, dans ladite conduite de chauffage de combustible, ladite soupape de purge est ouverte et ladite soupape de dépressurisation est fermée pendant un temps d'horloge spécifié après que ledit dispositif de chauffage de combustible ait commencé à évacuer le produit à purger accumulé dans ladite conduite de fluide de chauffage.

11. Centrale thermique à cycle combiné selon la revendication 9, dans laquelle ladite conduite de chauffage de combustible comprend en outre un dispositif de commande (57) destiné à délivrer un signal de commande afin d'ouvrir/fermer ladite soupape de purge (54) et ladite soupape de dépressurisation (29) en fonction d'un signal de température interne de ladite conduite de fluide de chauffage; et
dans laquelle, dans ladite conduite de chauffage de combustible, ladite soupape de purge est ouverte et ladite soupape de dépressurisation est fermée pendant un temps spécifié après que ledit dispositif de chauffage de combustible ait démarré jusqu'à ce qu'une température interne dépasse une température prédéterminée afin d'évacuer le produit à purger accumulé dans ladite conduite de milieu de chauffage.

12. Centrale thermique à cycle combiné selon la revendication 11, dans laquelle ladite conduite de chauffage de combustible comprend en outre un dispositif de commande (57) destiné à délivrer un signal de commande afin d'ouvrir/fermer ladite soupape de purge (34) et ladite soupape de dépressurisation (29) en fonction d'un signal de pression interne de ladite conduite de fluide de chauffage, à la place du dispositif de commande (57); et
dans laquelle, dans ladite conduite de chauffage de combustible, ladite soupape de purge est ouverte et ladite soupape de dépressurisation est fermée pendant un temps spécifié après que ledit dispositif de chauffage de combustible ait démarré jusqu'à ce que ladite pression interne dépasse une pression prédéterminée afin d'évacuer ledit produit à purger accumulé dans ladite conduite de milieu de chauffage.

13. Centrale thermique à cycle combiné selon la revendication 11, dans laquelle ladite conduite de chauffage de combustible comprend en outre un dispositif de commande (57) destiné à délivrer un signal de commande afin d'ouvrir/fermer ladite soupape de purge (54) et ladite soupape de dépressurisation (29) en fonction d'un signal de débit dudit fluide chauffage qui s'écoule dans ladite conduite de fluide de chauffage, à la place dudit dispositif de commande (57); et
dans laquelle, dans ladite conduite de chauffage de combustible, ladite soupape de purge est ouverte et ladite soupape de dépressurisation est fermée pendant un temps spécifié après que ledit dispositif de chauffage ait démarré jusqu'à ce que ledit débit dudit fluide chauffage dépasse un débit prédéterminé afin d'évacuer ledit produit à purger accumulé dans ladite conduite de fluide de chauffage.
